# EUROPEAN PATENT SPECIFICATION

(11) **EP 2 639 863 B1**
(45) Date of publication and mention of the grant of the patent: **25.01.2017**
(21) Application number: 11825258.4
(22) Date of filing: 16.09.2011
(51) Int. Cl.: H01M 4/131, H01M 4/62, H01M 4/04, H01M 4/66, H01M 4/1391

(54) **SECONDARY BATTERY POSITIVE ELECTRODE**
POSITIVE ELEKTRODE FÜR EINE SEKUNDÄRBATTERIE
ÉLECTRODE POSITIVE DE BATTERIE SECONDAIRE

(30) Priority: 27.04.2011 JP 2011099049; 25.02.2011 JP 2011039764; 16.09.2010 JP 2010208219
(43) Date of publication of application: 18.09.2013
(73) Proprietor: Zeon Corporation, Tokyo 100-8246 (JP)
(72) Inventor: SUGIMOTO, Takumi, Tokyo 100-8246 (JP); YABUUCHI, Yosuke, Tokyo 100-8246 (JP)
(74) Representative: Vossius & Partner Patentanwälte Rechtsanwälte mbB
(86) International application number: PCT/JP2011/071197
(87) International publication number: WO 2012/036260

(56) References cited:
- WO-A1-2008/012248
- WO-A1-2008/078803
- WO-A1-2008/097723
- JP-A- H02 500 986
- JP-A- 2000 294 252
- JP-A- 2002 216 768
- JP-A- 2006 040 800
- JP-A- 2006 278 303
- JP-A- 2009 117 159
- JP-A- 2010 092 706
- JP-A- 2010 108 624
- KR-A- 20090 023 287
- US-A- 4 774 018
- US-A- 5 654 114
- US-A1- 2004 020 763
- US-A1- 2009 061 325
- US-A1- 2009 123 851

## Description

### TECHNICAL FIELD

The present invention relates to a positive electrode for secondary cell, more particularly relates to a positive electrode for secondary cell which is high in initial capacity and excellent in rate characteristics and high temperature cycle characteristics. Further, the present invention relates to a secondary cell which has such a positive electrode for secondary cell and a slurry composition for secondary cell positive electrode and binder composition which are used for producing a positive electrode for secondary cell.

### BACKGROUND ART

The positive electrode which forms part of a lithium ion secondary cell or other lithium-based secondary cell is usually produced by coating a slurry which contains a binder, a positive electrode active material, and a solvent on an aluminum foil or other current collector and removing the solvent.

As such a slurry which forms a positive electrode for a lithium-based secondary cell, an organic-based slurry which uses a binder constituted by polyvinylidene fluoride (PVDF) or other fluorine-based resin and a solvent constituted by N-methyl-pyrrolidone (NMP) or other organic solvent is generally used.

However, on the other hand, in the method of using an organic-based slurry, there are the problem of the cost which is required for recycling the organic solvent or the problem of securing safety in use of an organic solvent. For this reason, to solve these problems, a water-based binder which uses a water-based slurry which has water as a medium has been studied.

For example, Patent Document 1 and document US5654114A disclose the art of preparing a water-based slurry for lithium-based secondary cell positive electrode which contains sodium polyacrylate or a carboxyl group-containing styrene-butadiene copolymer as a binder and using this water-based slurry to form a positive electrode active material layer on a current collector constituted by aluminum foil to thereby obtain a lithium-based secondary cell positive electrode. However, if, like in this Patent Document 1, using a water-based slurry, due to the effects of the water which is contained in the slurry, sometimes the current collector constituted by the aluminum foil ends up corroding at its surface and therefore there was the problem that the result failed to function sufficiently as a lithium-based secondary cell positive electrode.

As opposed to this, for example, Patent Document 2 discloses the art of using a compound of an oxalate and at least one element which is selected from silicon, chrome, and phosphorus to treat the surface of a current collector constituted by aluminum foil and thereby form a protective layer on the current collector constituted by the aluminum foil. However, in this Patent Document 2, due to the current collector constituted by the aluminum foil being formed with a protective layer, the current collector constituted by the aluminum foil ends up becoming high in resistance. Therefore, when made into a lithium-based secondary cell, there was the problem that the obtained lithium-based secondary cell became higher in internal resistance and the rate characteristics fell.

Further, Patent Document 3 discloses the art of preventing corrosion of the surface of a current collector constituted by aluminum foil by adding succinic anhydride, maleic anhydride, or phthalic anhydride to a water-based slurry for lithium-based secondary cell positive electrode which contains a positive electrode active material, a dispersant constituted by water, and carboxymethyl cellulose. However, the water-based slurry for lithium-based secondary cell positive electrode which is described in this Patent Document 3 had the problem, due to the effect of the pH adjuster, of being inferior in storage stability and ending up having a larger variation in characteristics when made into a secondary cell and the problem of the characteristics as a secondary cell, in particular the resistance, ending up deteriorating.

### PRIOR ART DOCUMENTS

### PATENT DOCUMENTS

Patent Document 1: U.S. Patent No. 5,378,560
Patent Document 2: Japanese Patent Publication (A) No. 2000-294252
Patent Document 3: Japanese Patent Publication (A) No. 2009-64564

### DISCLOSURE OF THE INVENTION

### PROBLEM TO BE SOLVED BY THE INVENTION

The present invention has as its object the provision of a positive electrode for secondary cell which is high in initial capacity and is excellent in rate characteristics and high temperature cycle characteristics. Further, the present invention has as its object the provision of a secondary cell which has such a positive electrode for secondary cell and a slurry composition for secondary cell positive electrode and binder composition which are used for producing a positive electrode for secondary cell.

### MEANS FOR SOLVING THE PROBLEMS

The present inventors engaged in intensive research to solve the above problems and as a result discovered that when forming a positive electrode active material layer on a current collector which is comprised of aluminum or an aluminum alloy, by using both a water-based binder and an organic phosphonic acid compound and polyvalent metal compound, it is possible to suppress corrosion of the current collector and, due to this, obtain a positive electrode for secondary cell which is high in initial capacity and excellent in rate characteristics and high temperature cycle characteristics, and thereby completed the present invention.

That is, according to the present invention, there is provided a positive electrode for secondary cell comprising a current collector which is comprised of aluminum or an aluminum alloy and a positive electrode active material layer, wherein the positive electrode active material layer contains a positive electrode active material, a water-based binder, an organic phosphonic acid compound, and a polyvalent metal compound.

In the positive electrode for secondary cell of the present invention, preferably the organic phosphonic acid compound is a polymer compound which has an organic phosphonic acid group.

In the positive electrode for secondary cell of the present invention, preferably the organic phosphonic acid compound further has a carboxyl group or sulfonic acid group.

In the positive electrode for secondary cell of the present invention, preferably the water-based binder is a nitrile group-containing polymer with an iodine value of 0 mg/100 mg or more and 30 mg/100 mg or less.

In the positive electrode for secondary cell of the present invention, preferably the nitrile group-containing polymer is obtained by polymerizing the monomers which form the nitrile group-containing polymer by emulsion polymerization using an emulsifier constituted by a nonionic surfactant.

In the positive electrode for secondary cell of the present invention, preferably the polyvalent metal compound is a polyvalent organometallic compound.

In the positive electrode for secondary cell of the present invention, preferably the positive electrode active material contains nickel.

Further, according to the present invention, there is provided a secondary cell comprising a positive electrode for secondary cell according to the above-mentioned present invention, a negative electrode, a separator, and an electrolytic solution.

Alternatively, according to the present invention, there is provided a slurry composition for secondary cell positive electrode comprising a positive electrode active material, a water-based binder, water, an organic phosphonic acid compound, and a polyvalent metal compound.

Further, according to the present invention, there is provided a binder composition comprising a water-based binder which is dispersed in water, an organic phosphonic acid compound, and a polyvalent metal compound.

Further, according to the present invention, there is provided a method of production of a positive electrode for secondary cell comprising a step of coating a current collector which is comprised of aluminum or an aluminum alloy by a slurry composition for secondary cell positive electrode according to the above-mentioned present invention and a step of drying the slurry composition for secondary cell positive electrode.

### EFFECTS OF THE INVENTION

According to the present invention, it is possible to provide a positive electrode for secondary cell which is high in initial capacity and excellent in rate characteristics and high temperature cycle characteristics and a secondary cell which has such a positive electrode for secondary cell, is high in initial capacity, and is excellent in rate characteristics and high temperature cycle characteristics. Further, according to the present invention, it is possible to provide a slurry composition for secondary cell positive electrode and binder composition which can give such a positive electrode for secondary cell.

### DESCRIPTION OF EMBODIMENTS

The positive electrode for secondary cell of the present invention conatains a current collector which is comprised of aluminum or an aluminum alloy and a positive electrode active material layer, the positive electrode active material layer containing a positive electrode active material, a water-based binder, an organic phosphonic acid compound, and a polyvalent metal compound.

First, the ingredients which form the positive electrode active material layer of the positive electrode for secondary cell of the present invention will be explained.

Note that, the positive electrode active material layer of the positive electrode for secondary cell of the present invention usually is formed by obtaining a slurry composition for secondary cell positive electrode which contains the later explained ingredients and uses water as a dispersant and by coating and drying the obtained slurry composition for secondary cell positive electrode on the current collector.

### (Positive Electrode Active Material)

The positive electrode active material which is used in the present invention is not particularly limited. Various active materials can be used. However, for example, when using the positive electrode for secondary cell of the present invention as a positive electrode for lithium-based secondary cell, it is possible to use a compound which contains a transition metal, specifically an oxide which contains a transition metal or a composite oxide of lithium and a transition metal. As examples of such a transition metal, cobalt, manganese, nickel, iron, etc. may be mentioned, but in the present invention, a compound which contains nickel, in particular a composite oxide which contains lithium and nickel is suitably used. In particular, a composite oxide which contains lithium and nickel is higher in capacity compared with the lithium cobalt oxide (LiCoO₂) which was used as a positive electrode active material of a lithium-based secondary cell in the past, so is preferable. As a composite oxide which contains lithium and nickel, for example, one of the following general formula may be mentioned.

LiNi_{1-x-y}COₓM_{y}O₂

(where, 0≤x<1, 0≤y<1, x+y<1, and M is at least one element which is selected from B, Mn, and Al)

The content of the positive electrode active material in the positive electrode active material layer of the positive electrode for secondary cell of the present invention is preferably 80 to 99.5 wt%, more preferably 90 to 99 wt%. If the content of the positive electrode active material is too small, the cell capacity in the case of being made into a secondary cell ends up falling. On the other hand, if the content of the positive electrode active material is too large, the ratio of the binder in the positive electrode active material layer ends up becoming small, so the binding property between particles of the positive electrode active material falls and the cycle characteristics is liable to deteriorate.

The positive electrode active material preferably has an average particle size of 0.01 to 30 µm, more preferably 0.02 to 20 µm. If the positive electrode active material is too small in average particle size, the positive electrode active material will sometimes fall in conductivity and the internal resistance in the case of being made into a secondary cell will become larger. On the other hand, if the positive electrode active material is too large in average particle size, when forming the slurry in order to form the positive electrode active material layer, the dispersability in the slurry will end up falling and production of a good slurry will become difficult.

### (Water-based Binder)

The water-based binder which is used in the present invention is a binder which can be used as a water-based slurry which contains water as a medium. It is not particularly limited so long as it is a polymer which can dissolve or disperse in water, but in the present invention, a nitrile group-containing polymer with an iodine value of 0 mg/100 mg or more and 30 mg/100 mg or less is preferably used.

As the nitrile group-containing polymer which is used in the present invention, one with an iodine value of 0 mg/100 mg or more and 30 mg/100 mg or less, preferably 0 mg/100 mg or more and 20 mg/100 mg or less, in particular 0 mg/100 mg or more and 10 mg/100 mg or lses is preferable. If the iodine value is too high, the electrical characteristics in the case of being used as a positive electrode for secondary cell are liable to deteriorate. The iodine value is found in accordance with JIS K6235(2006).

As such a nitrile group-containing polymer, for example, a water-based acrylic polymer or highly saturated nitrile polymer etc. may be mentioned.

The water-based acrylic polymer is not particularly limited so long as a polymer which can disperse in water and which has polymerization units of an α,β-unsaturated nitrile monomer and polymerization units of a (meth)acrylic acid ester monomer and which has polymerization units of a (meth) acrylic acid ester monomer in 50 wt% or more, but one which contains polymerization units of a (meth) acrylic acid ester monomer, polymerization units of a vinyl monomer which has an acid ingredient, and polymerization units of an α,β-unsaturated nitrile monomer is preferable. By using as the water-based acrylic polymer one which contains the above polymerization units, it is possible to further improve the strength and binding power of the binder.

As a (meth)acrylic acid ester monomer, methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, stearyl acrylate, or other acrylic acid alkyl ester; methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, stearyl methacrylate, or other methacrylic acid alkyl esters; etc. may be mentioned. Among these as well, since it does not elute into the electrolytic solution when made into a secondary cell and suitably swells the electrolytic solution to exhibit ion conductivity, one which has 6 to 13 carbon atoms in the alkyl groups which bond with the non-carbonyl oxygen atoms is preferable, while one which has 8 to 10 carbon atoms in the alkyl groups which bond with the non-carbonyl oxygen atoms is preferable, while 2-ethylhexyl acrylate is particularly preferable. Note that, these may be used alone or may be used in two or more types together.

In the water-based acrylic polymer, the ratio of content of the polymerization units of the (meth) acrylic acid ester monomer is preferably 50 to 95 wt%, more preferably 60 to 90 wt%. If the ratio of content of the polymerization units of the (meth) acrylic acid ester monomer is too low, the flexibility as a binder ends up falling, the obtained positive electrode for secondary cell ends up becoming hard, and cracks sometimes easily form. On the other hand, if the ratio of content is too high, the mechanical strength as a binder sometimes falls and the adhesion sometimes falls.

As the α,β-unsaturated nitrile monomer, from the viewpoint of the improvement of the mechanical strength and binding power, acrylonitrile or methacrylonitrile is preferable, while acrylonitrile is particularly preferable.

In the water-based acrylic polymer, the ratio of content of the polymerization units of the α,β-unsaturated nitrile monomer is preferably 3 to 40 wt%, more preferably 5 to 30 wt%. If the ratio of content of the polymerization units of the α,β-unsaturated nitrile monomer is too low, the mechanical strength as a binder sometimes falls and the adhesion sometimes falls. On the other hand, if the ratio of content is too high, the flexibility as a binder ends up falling, the obtained positive electrode for secondary cell ends up becoming hard, and cracks sometimes easily form.

As the vinyl monomer which has an acid ingredient, a monomer which has a -COOH group (carboxylic acid group) as an acid ingredient, a monomer which has an -OH group (hydroxyl group), a monomer which has an -SO₃H group (sulfonic acid group), a monomer which has an -PO₃H₂ group and/or -PO(OH) (OR) group (R indicates a hydrocarbon group), and a monomer which has a lower polyoxyalkylene group may be mentioned.

As a monomer which has a carboxylic acid group, a monocarboxylic acid and its derivatives and a dicarboxylic acid, its acid anhydrides, and their derivatives, etc. may be mentioned. As a monocarboxylic acid, acrylic acid, methacrylic acid, crotonic acid, etc. may be mentioned. As a monocarboxylic acid derivative, 2-ethylacrylic acid, isocrotonic acid, α-acetoxyacrylic acid, β-trans-aryloxyacrylic acid, α-chloro- β-E-methoxyacrylic acid, β-diaminoacrylic acid, etc. may be mentioned. As a dicarboxylic acid, maleic acid, fumaric acid, itaconic acid, etc. may be mentioned. As an acid anhydride of a dicarboxylic acid, maleic anhydride, acrylic anhydride, methylmaleic anhydride, dimethylmaleic anhydride, etc. may be mentioned. As a dicarboxylic acid derivative, methylmaleic acid, dimethylmaleic acid, phenylmaleic acid, chloromaleic acid, dicyclomaleic acid, fluoromaleic acid, or other maleic acid methylallyl, diphenyl maleate, nonyl maleate, decyl maleate, dodecyl maleate, octadecyl maleate, fluoroalkyl maleate, or other maleic acid esters may be mentioned.

As a monomer which has a hydroxyl group, (meth)allyl alcohol, 3-buten-1-ol, 5-hexen-1-ol, or other ethylenically unsaturated alcohol; acrylic acid-2-hydroxyethyl, acrylic acid-2-hydroxypropyl, methacrylic acid-2-hydroxyethyl, methacrylic acid-2-hydroxypropyl, maleic acid di-2-hydroxyethyl, maleic acid di-4-hydroxybutyl, itaconic acid di-2-hydroxypropyl, or other alkanol esters of ethylenically unsaturated carboxylic acids; esters of polyalkyleneglycol and (meth)acrylic acid expressed by the general formula CH₂=CR₁-COO- (CₙH₂ₙO)ₘ-H ("m" is an integer of 2 to 9, "n" is an integer of 2 to 4, and R¹ is hydrogen or a methyl group) ; 2-hydroxyethyl-2'-(meth)acryloyloxyphthalate, 2-hydroxy-ethyl-2' - (meth) acryloyloxysuccinate, or other mono (meth) acrylic acid esters of dihydroxyesters of dicarboxylic acid; 2-hydroxyethylvinylether, 2-hydroxypropylvinylether, or other vinylethers;
(meth)allyl-2-hydroxyethylether, (meth)allyl-2-hydroxypropylether, (meth)allyl-3-hydroxypropylether, (meth)allyl-2-hydroxybutylether, (meth)allyl-3-hydroxybutylether, (meth)allyl-4-hydroxybutylether, (meth)allyl-6-hydroxyhexylether, and other mono(meth)allylethers of alkyleneglycol; diethyleneglycol mono(meth)allylether, dipropyleneglycol mono(meth)allylether, and other polyoxyalkyleneglycol
mono(meth)allylethers; glycerin mono(meth)allylether,
(meth)allyl-2-chloro-3-hydroxypropylether,
(meth)allyl-2-hydroxy-3-chloropropylether, and other mono (meth)allylethers of halogen and hydroxy substituents of (poly)alkyleneglycols;
mono (meth) allylether of eugenol, isoeugenol, or other polyvalent phenols and their halogen substituents; (meth)allyl-2-hydroxyethylthioether, (meth)allyl-2-hydroxypropylthioether, and other (meth)allylthioethers of alkyleneglycol; etc. may be mentioned.

As a monomer which has a sulfonic acid group, vinyl sulfonic acid, methylvinyl sulfonic acid, (meth) allyl sulfonic acid, styrene sulfonic acid, 2-sulfonate-ethyl(meth)acrylate, 2-acrylamide-2-methylpropane sulfonic acid, 3-allyloxy-2-hydroxypropane sulfonic acid, etc. may be mentioned.

As a monomer which has a -PO₃H₂ group and/or -PO(OH)(OR) group (R indicates a hydrocarbon group), 2-(meth)acryloyloxyethyl phosphate, methyl-2-(meth)acryloyloxyethyl phosphate, ethyl-(meth)acryloyloxyethyl phosphate, etc. may be mentioned.

As a monomer which has a lower polyoxyalkylene group, poly(ethyleneoxide) or other poly(alkyleneoxide), etc. may be mentioned.

Among these as well, from the viewpoint of excellent adhesion with the current collector, a monomer which has a carboxylic acid group is preferable. Among these, acrylic acid, methacrylic acid, or other monocarboxylic acid which has a C₅ or less carboxylic acid group or maleic acid, itaconic acid, or other dicarboxylic acid which has two or more C₅ or less carboxylic acid groups is preferable. Further, from the viewpoint of being able to obtain a high storage stability of the water-based acrylic polymer, acrylic acid or methacrylic acid is preferable.

In the water-based acrylic polymer, the ratio of content of the polymerization units of the vinyl monomer which has the acid ingredient is preferably 1.0 to 5.0 wt%, more preferably 1.5 to 4.0 wt%. If the ratio of content of the polymerization units of the vinyl monomer which has the acid ingredient is too low, the binding property as a binder sometimes becomes insufficient and the cycle characteristicsometimes deteriorates. On the other hand, if the ratio of content is too high, sometimes the production stability and storage stability fall.

The water-based acrylic polymer which is used in the present invention may contain, in addition to the above polymerization units, polymerization units of a monomer which has cross-linkability. As a monomer which has cross-linkability, a monomer which contains an epoxy group, a monomer which contains a carbon-carbon double bond and epoxy group, a monomer which contains a halogen atom and epoxy group, a monomer which contains an N-methylolamide group, a monomer which contains an oxetanyl group, a monomer which contains an oxazoline group, a polyfunctional monomer which has two or more olefinic double bonds, etc. may be mentioned. The ratio of content in the case of containing polymerization units of a monomer which has cross-linkability is preferably 0.01 to 0.5 wt%, more preferably 0.05 to 0.3 wt%. If making the ratio of content the above range, it is possible to obtain suitable swellability to the electrolytic solution and possible to further improve the rate characteristics and cycle characteristics.

Further, the water-based acrylic polymer which is used in the present invention may contain other polymerization units other than the above. As the other polymerization units, polymerization units which are derived from other vinyl monomers may be mentioned. As such other vinyl monomers, for example, ethyleneglycol dimethacrylate, diethyleneglycol dimethacrylate, or other carboxylic acid esters which have two or more carbon-carbon double bonds; vinyl chloride, vinylidene chloride, or other halogen atom-containing monomer; vinyl acetate, vinyl propionate, vinyl butyrate, or other vinylesters; methylvinylether, ethylvinylether, butylvinylether, or other vinylethers; methylvinylketone, ethylvinylketone, butylvinylketone, hexylvinylketone, isopropenylvinylketone, or other vinylketones; N-vinylpyrrolidone, vinylpyridine, vinylimidazole, or other heterocyclic group-containing vinyl compound may be mentioned.

The water-based acrylic polymer which is used for the present invention is usually used in a state of a dispersion where it is dispersed in water in a particle state. In the case of dispersion in water in a particle state, the average particle size (dispersed particle size) of the water-based acrylic polymer is preferably 50 to 500 nm, more preferably 70 to 400 nm, furthermore preferably 90 to 250 nm. If the average particle size of the water-based acrylic polymer is in this range, the obtained positive electrode for secondary cell becomes excellent in strength and flexibility.

In the case dispersed in water in a particle state, the solid content concentration of the water-based acrylic polymer is usually 15 to 70 wt%, preferably 20 to 65 wt%, more preferably 30 to 60 wt%. If the solid content concentration is in this range, the workability in the case of preparing the slurry composition for secondary cell positive electrode is excellent.

The glass transition temperature (Tg) of the water-based acrylic polymer is preferably -50 to 25°C, more preferably -45 to 15°C, particularly preferably -40 to 5°C. By the glass transition temperature of the water-based acrylic polymer being in the above range, the obtained positive electrode for secondary cell can be made one which has excellent strength and flexibility and which has a high output characteristics. Note that, the glass transition temperature of the water-based acrylic polymer can be adjusted by changing the combination of the monomers for forming the polymerization units.

The method of production of the water-based acrylic polymer which is used in the present invention is not particularly limited, but the solution polymerization method, suspension polymerization method, bulk polymerization method, emulsion polymerization method, or any other method may be used, but among these, the emulsion polymerization method by using an emulsifier is preferable.

The emulsifier which is used for the emulsion polymerization is not particularly limited. Any of an anionic surfactant, nonionic surfactant, and cationic surfactant can be used, but from the viewpoint of being able to improve the storage stability at the time of making a slurry composition for secondary cell positive electrode, a nonionic surfactant is preferably used. As such a nonionic surfactant, a polyoxyethylene alkyl ether, polyoxyethylene alkyl ester, polyoxyethylene sorbitan alkyl ester, polyacrylic acid, polymethacrylic acid, polyvinylsulfonic acid, polyvinyl alcohol, polyvinylpyrrolidone, polyethyleneglycol, etc. may be mentioned. The amount of addition of the emulsifier can be freely set and is usually, with respect to 100 parts by weight of the total weight of the monomers which are used for the polymerization, about 0.01 to 10 parts by weight.

Further, as the polymerization initiator which is used for the polymerization, for example, lauroyl peroxide, diisopropylperoxydicarbonate, di-2-ethylhexylperoxydicarbonate, t-butyl peroxypivalate, 3,3,5-trimethyl hexanoylperoxide, or other organic peroxide, α,α'-azobis isobutyronitrile, or other azo compound, or ammonium persulfide, potassium persulfide, etc. may be mentioned.

Further, the highly saturated nitrile polymer is not particularly limited so long as a polymer which can be dispersed in water and which is obtained by hydrogenating a polymer containing polymerization units of an α,β-unsaturated nitrile monomer and polymerization units of a conjugated diene monomer.

As the α,β-unsaturated nitrile monomer, acrylonitrile; α-chloroacrylonitrile, α-bromoacrylonitrile, or other α-halogenoacrylonitrile; methacrylonitrile, or other α-alkyl acrylonitrile; etc. may be mentioned. Among these, in particular, acrylonitrile is preferable.

The ratio of content of the polymerization units of the α,β-unsaturated nitrile monomer in the highly saturated nitrile polymer is preferably 3 to 40 wt%, more preferably 5 to 30 wt%. If the ratio of content of the polymerization units of the α,β-unsaturated nitrile monomer is too low, the mechanical strength as the binder sometimes falls and the adhesion sometimes falls. On the other hand, if the ratio of content is too high, the flexibility as a binder ends up falling, the obtained positive electrode for secondary cell ends up becoming hard, and cracks sometimes easily occur.

As the conjugated diene monomer, 1,3-butadiene, isoprene, 2,3-dimethyl-1,3-butadiene, 1,3-pentadiene, chloroprene, etc. may be mentioned, Among these, 1, 3-butadiene and isoprene are more preferable, while 1,3-butadiene is particularly preferable.

The ratio of content of the polymerization units of the conjugated diene monomer (ratio of content including hydrogenated polymerization units) in the highly saturated nitrile polymer is preferably 60 to 97 wt%, more preferably 70 to 95 wt%. If the ratio of content of polymerization units of the conjugated diene monomer is too low, the flexibility as a binder ends up falling, the obtained positive electrode for secondary cell ends up becoming hard, and cracks sometimes easily occur. On the other hand, if the ratio of content is too high, the mechanical strength as the binder sometimes falls and the adhesion sometimes falls.

Further, the highly saturated nitrile polymer which is used in the present invention preferably contains polymerization units of a vinyl monomer which has an acid ingredient in addition to polymerization units of an α,β-unsaturated nitrile monomer and polymerization units of a conjugated diene monomer. As the vinyl monomer which has an acid ingredient, it is possible to use ones similar to the above-mentioned water-based acrylic polymers. By having the highly saturated nitrile polymer contain polymerization units of a vinyl monomer which has an acid ingredient, it is possible to improve the strength and binding power of the binder.

The ratio of content of the polymerization units of the vinyl monomer which has an acid ingredient in the highly saturated nitrile polymer is preferably 0.5 to 10 wt%, more preferably 1 to 7 wt%. If the ratio of content of polymerization units of the vinyl monomer which has an acid ingredient is too low, the binding property as a binder sometimes becomes insufficient and the cycle characteristicsometimes deteriorates. On the other hand, if the ratio of content is too high, sometimes the production stability and storage stability fall.

Further, the highly saturated nitrile polymer which is used in the present invention may contain other polymerization units other than the above. As the other polymerization units, ethylene, α-olefin monomer, aromatic vinyl monomer, α,β-unsaturated carboxylic acid ester monomer, α,β-unsaturated dicarboxylic acid monoester monomer, fluorine-containing vinyl monomer etc. may be mentioned.

The highly saturated nitrile polymer which is used in the present invention is usually used in a state of a dispersion where it is dispersed in water in a particle state. The average particle size (dispersed particle size) of the polymer in the case dispersed in water in a particle state is preferably 50 to 200 nm, more preferably 60 to 185 nm, furhtermore preferably 70 to 160 nm. If the average particle size of the highly saturated nitrile polymer is in this range, the obtained positive electrode for secondary cell becomes excellent in strength and flexibility.

In the case dispersed in water in a particle state, the highly saturated nitrile polymer has a solid content concentration of usually 10 to 60 wt%, preferably 20 to 55 wt%, more preferably 30 to 50 wt%. If the solid content concentration is in this range, the workability in the case of preparation of a slurry composition for secondary cell positive electrode becomes good.

The glass transition temperature (Tg) of the highly saturated nitrile polymer is preferably -50 to 25°C, more preferably -40 to 10°C, particularly preferably -35 to 0°C. If the glass transition temperature of the highly saturated nitrile polymer is in this range, the obtained positive electrode for secondary cell can be made one which has excellent strength and flexibility and which has a high output characteristics. Note that, the glass transition temperature of the highly saturated nitrile polymer can be adjusted by changing the combination of monomers for forming the polymerization units.

The method of production of the highly saturated nitrile polymer which is used in the present invention is not particularly limited. It maybe produced by polymerizing the monomers and hydrogenating the obtained polymer (hydrogenation reaction). As the method of polymerizing the monomers, the solution polymerization method, suspension polymerization method, bulk polymerization method, emulsion polymerization method, or any other method may be used, but among these, the emulsion polymerization method using an emulsifier is preferable. Further, the method of hydrogenation is not particularly limited. A known method may be employed.

The emulsifier which is used for the emulsion polymerization is not particularly limited. Any of an anionic surfactant, nonionic surfactant, and cationic surfactant can be used. The amount of the emulsifier added can be freely set and is usually, with respect to 100 parts by weight of the total weight of the monomers which are used for the polymerization, 0.01 to 10 parts by weight or so. Further, as the polymerization initiator which is used for the polymerization, one similar to the above-mentioned water-based acrylic polymers may be mentioned.

In the positive electrode active material layer of the positive electrode for secondary cell of the present invention, the content of the water-based binder is preferably, with respect to 100 parts by weight of the positive electrode active material, 0.1 to 10 parts by weight, more preferably 0.5 to 5 parts by weight, furthermore preferably 0.8 to 3 parts by weight. If the content of the water-based binder is too small, the binding property between the particles of the positive electrode active material is liable to fall and the cycle characteristics is liable to deteriorate. On the other hand, if too great, when applying the obtained positive electrode for secondary cell to the lithium-based secondary cell, sometimes movement of lithium ions ends up being obstructed and the cell resistance ends up being increased.

### (Organic Phosphonic acid Compound)

The positive electrode active material layer which is used in the present invention contains, in addition to the above-mentioned positive electrode active material and water-based binder, an organic phosphonic acid compound. In the present invention, by including the organic phosphonic acid compound in the positive electrode active material layer together with the later explained polyvalent metal compound, it is possible to prevent the occurrence of corrosion of the current collector when forming a positive electrode active material layer on the current collector. Due to this, it is possible to make the obtained positive electrode for secondary cell high in initial capacity and excellent in rate characteristics and high temperature cycle characteristics.

As the organic phosphonic acid compound, when expressing the ratio of its molecular weight and phosphonic acid groups as the "molecular weight/phosphonic acid groups", one with a molecular weight/phosphonic acid groups = less than 110 is preferable, while one with a molecular weight/phosphonic acid groups = less than 100 is more preferable. As specific examples of such an organic phosphonic acid compound,
1-hydroxyethylidene-1,1-diphosphonic acid, 1-hydroxypropylidene-1,1-diphosphonic acid, 1-hydroxybutylidene-1,1-diphosphonic acid, aminotrimethylene phosphonic acid, methyl diphosphonic acid, nitrotrismethylene phosphonic acid, ethylenediamine tetramethylene phosphonic acid, ethylenediamine bismethylene phosphonic acid, aminotrismethylene phosphonic acid, hexamethylenediamine tetramethylene phosphonic acid, diethylenetriamine pentamethylene phosphonic acid, cyclohexanediamine tetramethylene phosphonic acid, carboxyethanephosphonic acid, phosphonoacetic acid, 2-phosphonobutane-1,2,4-tricarboxylic acid, 2,3-dicarboxypropane-1,1-diphosphonic acid, phosphonobutylic acid, phosphonopropionic acid, sulfonylmethyl phosphonic acid, and their salts may be mentioned. Among these, from the viewpoint of being able to make a slurry composition for secondary cell positive electrode which is excellent in solubility in water, one which has a carboxyl group or sulfonic acid group is preferable, while one which has a carboxyl group is more preferable.

Further, the organic phosphonic acid compound which is used in the present invention may be an organic phosphonic acid group-containing polymer compound which is obtained by introducing an organic phosphonic acid group in a polymer compound. In particular, in the present invention, by using an organic phosphonic acid group-containing polymer compound as the organic phosphonic acid compound, it is possible to improve the storage stability when made a slurry composition for secondary cell positive electrode or binder composition.

As the organic phosphonic acid group-containing polymer compound, either a homopolymer of a phosphonic acid group-containing monomer or a copolymer of a phosphonic acid group-containing monomer and a monomer which can copolymerize with the phosphonic acid group-containing monomer is possible, but a copolymer is preferable. By having the organic phosphonic acid group-containing polymer compound be made a copolymer of a phosphonic acid group-containing monomer and a monomer which can copolymerize with a phosphonic acid group-containing monomer, it is possible to furhter improve the storage stability when made into a slurry composition for secondary cell positive electrode.

As the monomer which has a phosphonic acid group which forms the phosphonic acid group-containing monomer units, for example, vinylphosphonic acid, monovinyl phosphate, allylphosphonic acid, monoallyl phosphate, 3-butenylphosphonic acid, mono-3-butenyl phosphate, 4-vinyloxybutyl phosphate, phosphonoxyethyl acrylate, phosphonoxyethyl methacrylate, mono(2-hydroxy-3-vinyloxypropyl) phosphate, (1-phosphonoxymethyl-2-vinyloxyethyl) phosphate, mono(3-allyloxy-2-hydroxypropyl) phosphate, mono-2-(allyloxy-1-phosphonoxymethylethyl) phosphate, 2-hydroxy-4-vinyloxymethyl-1,3,2-dioxaphosphole, 2-hydroxy-4-allyloxymethyl-1,3,2-dioxaphosphole, etc. may be mentioned. Note that, these may be used alone or may be used in two or more types together. Among these, vinylphosphonic acid, monovinyl phosphate, or allylphosphonic acid is preferable, vinylphosphonic acid is particularly preferable.

The ratio of content of the phosphonic acid group-containing monomer units in the organic phosphonic acid group-containing polymer compound which is used in the present invention has a lower limit of preferably 3 wt% or more, more preferably 5 wt% or more, particularly preferably 10 wt% or more, and an upper limit of preferably 70 wt% or less, more preferably 60 wt% or less, particularly preferably 50 wt% or less. If the ratio of content of the phosphonic acid group-containing monomer units is too low, the effect of addition sometimes becomes small. On the other hand, if too large, the storage stability when used for a binder composition or lurry composition for secondary cell positive electrode sometimes is liable to deteriorate.

Further, the monomer which can copolymerize with the phosphonic acid group-containing monomer is not particularly limited, but a carboxyl group-containing monomer, sulfonic acid group-containing monomer, or (meth) acrylic acid ester monomer (it means "acrylic acid ester monomer and/or methacrylic acid monomer".) etc. may be mentioned. Among these, a carboxyl group-containing monomer or sulfonic acid group-containing monomer is preferable. In particular, a carboxyl group-containing monomer is preferable. As a copolymerizable monomer, by using a carboxyl group-containing monomer or sulfonic acid group-containing monomer, a polymer compound which has an organic phosphonic acid group may be made one which has not only an organic phosphonic acid group but also a carboxyl group or sulfonic acid group. Due to this, the effect of the present invention can be made more remarkable.

As the carboxyl group-containing monomer, a monocarboxylic acid and its derivatives, dicarboxylic acid and its acid anhydrides and their derivatives, etc. may be mentioned.

As specific examples of monocarboxylic acids, acrylic acid, methacrylic acid, crotonic acid, etc. maybe mentioned. As specific examples of derivatives of monocarboxylic acids, 2-ethylacrylic acid, isocrotonic acid, α-acetoxyacrylic acid, β-trans-aryloxyacrylic acid,
α-chloro-β-E-methoxyacrylic acid, β-diaminoacrylic acid, etc. may be mentioned. As specific examples of a dicarboxylic acid, maleic acid, fumaric acid, itaconic acid, etc. may be mentioned. As specific examples of an acid anhydride of a dicarboxylic acid, maleic anhydride, acrylic anhydride, methylmaleic anhydride, dimethylmaleic anhydride, etc. may be mentioned. As specific examples of the derivative of a dicarboxylic acid, methylmaleic acid, dimethylmaleic acid, phenylmaleic acid, chloromaleic acid, dichloromaleic acid, fluoromaleic acid, or other maleic acid methyl allyl; diphenyl maleate, nonyl maleate, decyl maleate, dodecyl maleate, octadecyl maleate, fluoroalkyl maleate, or other maleic acid esters; etc. may be mentioned.

Among these, from the viewpoint of further raising the dispersibility of the organic phosphonic acid group-containing polymer compound in water, acrylic acid, methacrylic acid, or other ethylenically unsaturated monocarboxylic acid is preferable. Note that, these may be used alone or may be used in two or more types together.

As sulfonic acid group-containing monomers, isoprene and butadiene and other monomers which sulfonate one of the conjugated double bonds of the diene compound; vinyl sulfonic acid, styrene sulfonic acid, allyl sulfonic acid, sulfoethyl methacrylate, sulfopropyl methacrylate, or other sulfonic acid group-containing monomer or its salt; 2-acrylamide-2-methylpropanesulfonic acid (AMPS) or other monomer which contains an amide group and sulfonic acid group or its salt; 3-allyloxy-2-hydroxypropanesulfonic acid (HAPS) or other monomer which contains a hydroxyl group and sulfonic acid group or its salt; etc. may be mentioned. Note that, these may be used alone or may be used in two or more types together.

As the (meth) acrylic acid ester monomer, for example, methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, stearyl acrylate, or other acrylic acid alkyl ester; methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, stearyl methacrylate, and other methacrylic acid alkyl esters etc. may be mentioned. Note that, these may be used alone or may be used in two or more types together.

The ratio of content of units of ther copolymerizable monomers in the organic phosphonic acid group-containing polymer compound has a lower limit of preferably 30 wt% or more, more preferably 40 wt% or more, particularly preferably 50 wt% or more, and an upper limit of preferably 97 wt% or less, more preferably 95 wt% or less, particularly preferably 90 wt% or less.

As the method of production of an organic phosphonic acid group-containing polymer compound, for example, the method of polymerizing the above-mentioned monomer which has a phosphonic acid group and a monomer which can copolymerize with the same may be mentioned. The polymerization method is not particularly limited, but, for example, a method similar to the above water-based acrylic polymer may be mentioned. Further, when producing an organic phosphonic acid group-containing polymer compound by the suspension polymerization method or emulsion polymerization method using the water-based solvent, the obtained organic phosphonic acid group-containing polymer compound usually can be obtained in the state of an aqueous solution dissolved in a water-based solvent. Further, in this case, it is possible to use the organic phosphonic acid group-containing polymer compound which was obtained in the aqueous solution state as is in the state of an aqueous solution so as to produce the binder composition and slurry composition for secondary cell positive electrode.

The organic phosphonic acid group-containing polymer compound has a number average molecular weight (Mn) of preferably 5,000 to 500,000, more preferably 10,000 to 200,000, furhtermore preferably 20,000 to 100,000. If the molecular weight is too low, the effect of improvement of the storage stability when made a slurry composition for secondary cell positive electrode or binder composition sometimes becomes difficult. On the other hand, if the molecular weight is too high, when made a slurry composition for secondary cell positive electrode, the polymer compound which has an organic phosphonic acid group sometimes ends up precipitating. Note that, the number average molecular weight of the organic phosphonic acid group-containing polymer compound can, for example, be found by gel permeation chromatography (GPC) as a value converted to polyethylene oxide using a solution of 0.85 g/ml of sodium nitrate dissolved in a 10 vol% aqueous solution of acetonitrile as a developing solution.

The content of the organic phosphonic acid compound in the positive electrode active material layer of the positive electrode for secondary cell of the present invention has, with respect to 100 parts by weight of the positive electrode active material, a lower limit of preferably 0.01 part by weight or more, more preferably 0.03 part by weight, and furethermore preferably 0.05 part by weight or more, and an upper limit of preferably 5 parts by weight or less, more preferably 3 parts by weight or less, furthermore preferably 1 part by weight or less, particularly preferably 0.5 part by weight or less. If the content of the organic phosphonic acid compound is too small, the effect of addition sometimes cannot be obtained, while if too large, the ratio of the positive electrode active material in the positive electrode active material layer ends up becoming small, so the capacity tends to become low.

### (Polyhyvalent Metal Compound)

Further, the positive electrode active material layer which is used in the present invention contains, in addition to the above-mentioned positive electrode active material, water-based binder, and organic phosphonic acid compound, a polyvalent metal compound. In the present invention, as explained above, by having the positive electrode active material layer contain both the above-mentioned organic phosphonic acid compound and polyvalent metal compound, it is possible to prevent the occurrence of corrosion at the current collector at the time of forming a positive electrode active material layer on the current collector.

As a specific example of a polyvalent metal compound, a polyvalent inorganic metal compound and polyvalent organometallic compound may be mentioned, but from the viewpoint of being able to make the slurry composition for secondary cell positive electrode and binder composition excellent in storage stability, a polyvalent organometallic compound is preferable.

In particular, by using the above-mentioned organic phosphonic acid compound and polyvalent organometallic compound in combination, even if increasing these amounts relatively, due to the excellent water solubility, it is possible to prevent the organic phosphonic acid compound and polyvalent organometallic compound from ending up precipitating in the slurry composition for secondary cell positive electrode and binder composition. For this reason, by using a polyvalent organometallic compound, it is possible to make the slurry composition for secondary cell positive electrode and binder composition excellent in storage stability while further improving the effects of addition of these organic phosphonic acid compounds and polyvalent organometallic compounds by relatively increasing the amounts of these.

As specific examples of the polyvalent organometallic compound, a formate, acetate, citrate, tartrate, lactate, maleate, fumarate, mandelate, oxalate, etc. of polyvalent metals etc. may be mentioned. Among these, an acetate, citrate, tartrate, lactate, and maleate of polyvalent metals are preferable, while from the viewpoint of excellent water solubility, an acetate is particularly preferable.

As specific examples of the polyvalent inorganic metal compound, a hydroxide, chloride, sulfide, carbonate, hydrochloride, sulfate, nitrate, etc. of a polyvalent metals may be mentioned. Among these, a hydroxide and carbonate of a polyvalent metals are preferable, while a hydroxide is particularly preferable.

Further, as the polyvalent metal, for example, magnesium, calcium, barium, aluminum, chrome, iron, copper, manganese, nickel, vanadium, zinc, tin, etc. may be mentioned. Among these, bivalent metals are preferable, magnesium, calcium, and barium are more preferable, and calcium is particularly preferable.

In the positive electrode active material layer of the positive electrode for secondary cell of the present invention, the content of the polyvalent metal compound is, with respect to 100 parts by weight of the positive electrode active material, preferably 0.01 to 5 parts by weight, more preferably 0.03 to 3 parts by weight, furthermore preferably 0.05 to 1 part by weight. If the content of the polyvalent metal compound is too small, the effect of addition sometimes cannot be obtained, while if too large, the ratio of the positive electrode active material in the positive electrode active material layer ends up becoming smaller, so sometimes the capacity becomes lower.

Further, in the positive electrode active material layer of the positive electrode for secondary cell of the present invention, the ratio of content of the organic phosphonic acid compound and the polyvalent metal compound is, by weight ratio of the "organic phosphonic acid compound:polyvalent metal compound", preferably 1:0.1 to 1:5, more preferably 1:0.5 to 1:3, furhtermore preferably 1:0.8 to 1:2. If the ratio of content of the organic phosphonic acid compound is too high or is too low, the effect of prevention of corrosion of the current collector is liable to become insufficient.

The positive electrode active material layer which is used in the present invention may further have, in addition to the above ingredients, a conductivity imparting material, reinforcing material, dispersant, leveling agent, antioxidant, thickener, electrolytic solution additive which has the function of suppressing electrolytic solution decomposition etc., and other binder and other ingredients. It may also be contained in the later-explained slurry composition for secondary cell positive electrode. These are not particularly limited so long as not having an effect on the cell reaction.

As the conductivity imparting material, acetylene black, ketjen black, carbon black, graphite, and other conductive carbons, fibers and foils of various metals, etc. may be mentioned. By using a conductivity imparting material, it is possible to improve the electrical contact between positive electrode active materials and possible to improve the discharge load characteristics in the case of making a secondary cell. By including a conductivity imparting material, it is possible to improve the rate characteristics of the positive electrode for secondary cell. The content of the conductivity imparting material in the positive electrode active material layer is, with respect to 100 parts by weight of the positive electrode active material, usually 0.01 to 20 parts by weight, preferably 1 to 10 parts by weight.

As the reinforcing material, various types of inorganic and organic spherical, plate-shaped, or bar shaped fillers may be used. By using a reinforcing material, the obtained positive electrode for secondary cell can be made tough and flexible. Due to this, the cycle characteristics can be further improved. The content of the reinforcing material in the positive electrode active material layer is usually, with respect to 100 parts by weight of the positive electrode active material, 0.01 to 20 parts by weight, preferably 1 to 10 parts by weight.

As the dispersant, for example, an anionic compound, cationic compound, nonionic compound, or polymer compound may be illustrated. The dispersant may be selected in accordance with the positive electrode active material or conductivity imparting material which are used. By including a dispersant, it is possible to improve the stability of the slurry composition in the case of making a slurry composition for secondary cell positive electrode. Due to this, it is possible to improve the smoothness of the obtained positive electrode for secondary cell. Due to this, a higher capacity becomes possible. The content of the dispersant in the positive electrode active material layer is, with respect to 100 parts by weight of the positive electrode active material, preferably 0.01 to 10 parts by weight.

As the leveling agent, for example, an alkyl-based surfactant, silicon-based surfactant, fluorine-based surfactant, metal-based surfactant, or other surfactant may be mentioned. By including a leveling agent, when making a slurry composition for secondary cell positive electrode and coating this on a current collector, it is possible to prevent occurance of shedding and possible to improve the smoothness of the obtained positive electrode for secondary cell. The ratio of content of the leveling agent in the positive electrode active material layer is preferably, with respect to 100 parts by weight of the positive electrode active material, 0.01 to 10 parts by weight.

As the antioxidant, for example, a phenol compound, hydroquinone compound, organophosphorus compound, sulfur compound, phenylene diamine compound, polymer-type phenol compound, etc. may be mentioned. A polymer type phenol compound is a polymer which has a phenol structure in the molecule. Its weight average molecular weight is preferably 200 to 1000, more preferably 600 to 700. By including the antioxidant, it is possible to improve the stability of the slurry composition in the case of making a slurry composition for secondary cell positive electrode and possible to improve the cell capacity and cycle characteristics when making a secondary cell. The content of the antioxidant in the positive electrode active material layer is, with respect to 100 parts by weight of the positive electrode active material, preferably 0.01 to 10 parts by weight, more preferably 0.05 to 5 parts by weight.

As the thickener, for example, carboxylmethylcellulose, methylcellulose, hydroxypropylcellulose, or other cellulose-based polymers and their ammonium salts and alkali metal salts; modified or unmodified poly(meth)acrylic acids and their ammonium salts and alkali metal salts; modified or unmodified polyvinyl alcohols, copolymers of acrylic acid or acrylates and vinyl alcohol, maleic anhydride, copolymers of maleic acid or fumaric acid and vinyl alcohol, or other polyvinyl alcohols; polyethyleneglycol, polyethyleneoxide, polyvinylpyrrolidone, modified polyacrylic acid, starch oxide, starch phosphate, casein, various types of modified starch, acrylonitrile-butadiene copolymer hydrogenates, etc. may be mentioned. By including the thickener, it is possible to make the slurry viscosity at the time of making the slurry composition for secondary cell positive electrode good. Due to this, it is possible to make the coatability to the current collector good. The content of the thickener in the positive electrode active material layer is, with respect to 100 parts by weight of the positive electrode active material, preferably 0.01 to 10 parts by weight.

As the electrolytic solution additive, for example, vinylene carbonate may be used. By including an electrolytic solution additive, it is possible to improve the cycle characteristics and high temperature characteristics when making a secondary cell. The ratio of content of the electrolytic solution additive in the positive electrode active material layer is, with respect to 100 parts by weight of the positive electrode active material, preferably 0.01 to 10 parts by weight.

Further, in addition to the above, fumed silica or fumed alumina or other nanoparticles; an alkyl-based surfactant, silicon-based surfactant, fluorine-based surfactant, metal-based surfactant, or other surfactant; etc. may be included.

### (Current Collector)

The current collector which is used in the present invention is not particularly limited so long as a material which has electrical conductivity and which has electrochemical durability, but from the viewpoint of having heat resistance and being stable electrochemically, aluminum or an aluminum alloy is used. As the aluminum alloy, for example, an alloy of one or more types of elements which are selected from the group comprised of iron, magnesium, zinc, manganese, and silicon with aluminum may be mentioned. The shape of the current collector is not particularly limited, but a sheet shape with a thickness of about 0.001 to 0.5 mm or so is preferable. The current collector may be roughened at its surface in advance so as to raise the bond strength of the positive electrode active material layer. As the roughening method, a mechanical polishing method, electrolytic polishing method, chemical polishing method, etc. may be mentioned. In the mechanical polishing method, polishing cloth paper on which polishing agent particles are fixed, a grindstone, emery buffing wheel, wire brush provided with steel wire etc. are used.

### (Positive Electrode for Secondary Cell)

The method of producing the positive electrode for secondary cell of the present invention is not particularly limited so long as binding a positive electrode active material layer in a laminar form on at least one surface and preferably both surfaces of the current collector, but in the present invention, it is possible to prepare a slurry composition for secondary cell positive electrode and coat and dry this on the current collector to produce a positive electrode for secondary cell. The slurry composition for secondary cell positive electrode is not particularly limited in method of coating on the current collector. For example, the doctor blade method, dip method, reverse roll method, direct roll method, gravure method, extrusion method, brushing method, or other method may be mentioned. As the drying method, for example, drying by using the warm air, hot air, or low humidity air, vacuum drying, irradiating (far) infrared ray or electron beam or other drying method may be mentioned.

The positive electrode for secondary cell of the present invention is preferably pressed by using a mold press or roll press etc. and, due to this, reduced in porosity. The preferable range of porosity is 5 to 15%, more preferably 7 to 13%. If the porosity is too high, the charging efficiency or discharging efficiency deteriorates. If the porosity is too low, it is difficult to obtain a high volume capacity and the problem arises that the positive electrode active material layer easily peels off resulting in easy formation of defects.

The positive electrode for secondary cell of the present invention has a thickness of usually 5 to 150 µm, preferably 10 to 100 µm. By the electrode thickness being in the above range, both a high load characteristics and energy density are exhibited.

### (Slurry Composition for Secondary Cell Positive Electrode)

The slurry composition for secondary cell positive electrode of the present invention is a slurry composition which is used for producing the above-mentioned positive electrode for secondary cell and includes a positive electrode active material, water-based binder, organic phosphonic acid compound, polyvalent metal compound, and dispersant constituted by water. As the positive electrode active material, water-based binder, organic phosphonic acid compound, and polyvalent metal compound, the above-mentioned ones may be used. Further, when the positive electrode active material layer is made to contain the above-mentioned conductivity imparting material, reinforcing material, dispersant, leveling agent, antioxidant, thickener, electrolytic solution additive having the function of suppressing electrolytic solution decomposition etc., or other binder or other ingredients, these ingredients are preferably included.

The slurry composition for secondary cell positive electrode of the present invention is not limited in solid content concentration so long as becoming a viscosity of an extent enabling coating or dipping and having fluidity, but in general is 10 to 80 wt% or so.

The method of production of the slurry composition for secondary cell positive electrode of the present invention is not particularly limited, but, first, among the ingredients which form the slurry composition for secondary cell positive electrode, the water-based binder, organic phosphonic acid compound, polyvalent metal compound, and water are mixed to obtain a binder composition. Further, to the obtained binder composition, the positive electrode active material and the other ingredients which are added according with need are added and mixed, whereby a slurry composition for secondary cell positive electrode can be obtained. Note that, when the water-based binder is a water-based acrylic polymer or highly saturated nitrile polymer, as explained above, it is used in the state of a dispersion where it is dispersed in water in a particle state. Therefore, in the binder composition and slurry composition for secondary cell positive electrode, the water-based acrylic polymer or highly saturated nitrile polymer is included in a state where it is dispersed in a dispersant constituted by water. The mixing apparatus is not particularly limited so long as an apparatus which can uniformly mix the above ingredients, but a beads mill, ball mill, roll mill, sand mill, pigment disperser, stone mill, ultrasonic disperser, homogenizer, planetary mixer, fillmics, etc. may be used, but among them, due to its ability to disperse even when the concentration is high, a ball mill, roll mill, pigment disperser, stone mill, or planetary mixer may be preferably used.

The viscosity of the slurry composition for secondary cell positive electrode is, from the viewpoint of uniform coatability and slurry stabilization along with time, preferably 10 to 100000 mPa -s, more preferably 100 to 50000 mPa·s. The above viscosity is a value when measured using a B-type viscometer at 25°C by a number of roatations of 60 rpm.

Further, the slurry composition for secondary cell positive electrode of the present invention has a pH of preferably 7 to 13, more preferably 8 to 13.2, furthermore preferably 10 to 12.5. If the pH is in the above range, there are the advantages that the slurry composition is improved in dispersion stability and the effect of the present invention is remarkably exhibited. On the other hand, if the pH is less than 7, the dispersion of the active material in the slurry composition becomes unstable and the problem arises of the occurrence of agglomerates in the slurry.

The slurry composition for secondary cell positive electrode of the present invention contains, in addition to the positive electrode active material, water-based binder, and dispersant constituted by the water, an organic phosphonic acid compound and a polyvalent metal compound. The slurry composition for secondary cell positive electrode of the present invention contains an organic phosphonic acid compound and polyvalent metal compound, so when coating the slurry composition on an aluminum or an aluminum alloy current collector, corrosion of the current collector (for example, corrosion due to dissolution of the aluminum etc.) can be prevented. For example, in the past, as the positive electrode active material, a nickel-containing compound was used. Due to this, when trying to raise the capacity, if coating a slurry composition containing a nickel-containing compound on a current collector which is comprised of aluminum or an aluminum alloy, due to the influence of the nickel-containing compound, the pH of the slurry composition ends up becoming high, corrosion of the current collector which is comprised of aluminum or an aluminum alloy becomes remarkable, and, as a result, there was the problem that the obtained secondary cell ended up deteriorating in initial capacity, rate characteristics, and high temperature cycle characteristics. As opposed to this, in the present invention, by including an organic phosphonic acid compound and polyvalent metal compound in the slurry composition for secondary cell positive electrode, the above problems can be effectively solved.

### (Secondary Cell)

The secondary cell of the present invention is provided with the above-mentioned positive electrode for secondary cell of the present invention, a negative electrode, a separator and an electrolytic solution.

As the secondary cell, a lithium ion secondary cell, nickel metal hydride secondary cell, etc. may be mentioned, but improvement of the long term cycle characteristics, improvement of the output characteristics, and other improvements are being sought, so a lithium ion secondary cell is preferable. Below, a secondary cell of the present invention will be explained while illustrating the case of making a lithium ion secondary cell.

As the electrolytic solution of the secondary cell of the present invention, an organic electrolytic solution comprised of an organic solvent in which a support electrolyte is dissolved is used. As the support electrolyte, a lithium salt is used. The lithium salt is not particularly limited, but LiPF₆, LiAsF₆, LiBF₄, LiSbF₆, LiAlCl₄, LiClO₄ CF₃SO₃Li, C₄F₉SO₃Li, CF₃COOLi, (CF₃CO₂NLi, (CF₃SO₂)₂NLi, (C₂F₅SO₂)NLi, etc. may be mentioned. Among these, from the viewpoint of the ease of dissolution in an organic solvent and exhibition of a high degree of dissociation, LiPF₆, LiClO₄, and CF₃SO₃Li are preferable. These may be jointly used in two or more types. The higher the degree of dissociation of the support electrolyte used, the higher the lithium ion conductivity can be made.

Further, the organic solvent is not particularly limited so long as able to dissolve the supporting electrolyte, but dimethyl carbonate (DMC), ethylene carbonate (EC), diethyl carbonate (DEC), propylene carbonate (PC), butylene carbonate (BC), methylethyl carbonate (MEC), or other carbonates; γ-butyrolactone, methyl formate, or other esters; 1,2-dimethoxyethane, tetrahydrofuran, or other ethers; sulfolane, dimethyl sulfoxide, or other sulfur-containing compounds are preferably used. Further, these organic solvents may also be used mixed. Among these, from the viewpoint of the high permittivity and the broad stable potential region, carbonates are preferable.

Further, the electrolytic solution may also contain an additive. As an additive, for example, vinylene carbonate (VC) or other carbonate-based compounds may be mentioned.

The concentration of the support electrolyte in the electrolytic solution is usually 1 to 30 wt%, preferably 5 to 20 wt%. Further, in accordance with the type, the support electrolyte is used in a concentration of usually 0.5 to 2.5 moles/L. Even if the concentration of the support electrolyte is too low or too high, the ion conductivity tends to fall.

Instead of the above-mentioned electrolytic solution, polyethylene oxide, polyacrylonitrile, or other polymer electrolyte or a gel-state polymer electrolyte comprised of this polymer electrolyte impregnated with an electrolytic solution or LiI, Li₃N, or other inorganic solid electrolyte may be used.

As the separator, polyethylene, polypropylene, or other polyolefin microporous membrane or nonwoven fabric; a porous resin coat which contains inorganic ceramic powder; or other known one may be used. As specific examples of the separator, a polyethylene, polypropylene, or other polyolefin resin or aromatic polyamide resin-containing microporous membrane or nonwoven fabric; porous resin coat which contains inorganic ceramic powder; or other known one may be used. For example, a microporous film which is comprised of polyolefin-based ones (polyethylene, polypropylene, polybutene, and polyvinyl chloride) and their mixtures or copolymers or other resins, a microporous film comprised of polyethylene terephthalate, polycyclolefin, polyether sulfone, polyamide, polyimide, polyimide amide, polyaramide, polycyclolefin, nylon, polytetrafluoroethylene, or other resin or a polyolefin-based fiber which is woven together or its nonwoven fabric, agglomerate of insulating substance particles etc. may be mentioned. Among these, in view of the facts that the thickness of the separator as a whole can be made thinner and, due to this, the ratio of the active material in the secondary cell can be raised and the capacity per volume can be raised, a microporous film comprised of a polyolefin-based resin is preferable.

The thickness of the separator is usually 0.5 to 40 µm, preferably 1 to 30 µm, more preferably 1 to 10 µm. If in this range, the resistance due to the separator in the cell becomes small and the work efficiency when preparing a cell is excellent.

As the negative electrode, one comprised of a negative electrode active material layer which contains a negative electrode active material and binder, the layer laminated on a current collector may be used.

As the negative electrode active material, for example, amorphous carbon, graphite, natural graphite, mesocarbon microbeads, pitch-based carbon fiber, or other carbonaceous materials; polyacene or other conductive polymers; silicon, tin, zinc, manganese, iron, nickel, and other metals and their alloys; oxides or sulfates of the metals or alloys; metal lithium; Li-Al, Li-Bi-Cd, Li-Sn-Cd, and other lithium alloys; lithium transition metal nitrides; silicon; etc. may be used. Further, in the present invention, as the negative electrode active material, it is possible to use one which has a conductivity imparting material deposited on its surface by a mechanical modification method. The particle size of the negative electrode active material may be suitably selected by the balance with other elements which form the secondary cell, but from the viewpoint of improvement of the initial efficiency, load characteristics, cycle characteristics, or other cell characteristics, the cumulative 50% volume diameter is preferably 1 to 50 µm, more preferably 15 to 30 µm.

Further, the ratio of content of the negative electrode active material in the negative electrode active material layer is preferably 90 to 99.9 wt%, more preferably 95 to 99 wt%. By making the content of the negative electrode active material in the negative electrode active material layer the above range, it is possible to obtain a high capacity while obtaining flexibility and a binding property.

The negative electrode active material layer may also contain, in addition to the above ingredients, the dispersant which is used in the above-explained positive electrode for secondary cell or an electrolytic solution additive which has the function of suppressing decomposition of the electrolytic solution etc. or other ingredient. These are not particularly limited so long as not having an influence on the cell reaction.

The binder which is used as the negative electrode active material layer is not particularly limited. A known one can be used. As the binder, for example, polyethylene, polytetrafluoroethylene (PTFE), polyvinylidene fluoride (PVDF), tetrafluoroethylene-hexafluoropropylene copolymer (FEP), polyacrylic acid derivative, polyacrylonitrile derivative, or other resin or an acrylic-based soft polymer, diene-based soft polymer, olef in-based soft polymer, vinyl-based soft polymer, or other soft polymer can be used. These may be used alone or may be jointly used in two or more types.

As the current collector, for example, it is possible to use iron, copper, aluminum, nickel, stainless steel, titanium, tantalum, gold, platinum, or other metal material, but from the viewpoint of having a high electrical conductivity and stability electrochemically, copper is particularly preferable.

The thickness of the negative electrode is usually 5 to 300 µm, preferably 10 to 250 µm. By the electrode thickness being in the above range, both the load characteristics and energy density are high.

The negative electrode can be produced in the same way as the above-mentioned positive electrode for secondary cell.

The secondary cell of the present invention can be produced by laminating the positive electrode for secondary cell of the above-mentioned present invention and the negative electrode through a separator, winding or bending them etc. in accordance with the cell shape, placing them in a cell case, filling the cell case with an electrolytic solution, and sealing it. For preventing the rise in pressure inside of the cell and occurrence of an excessive discharge, it is also possible to provide an expander metal, fuse, PTC device, or other overcurrent preventing device, lead plate, etc. in accordance with need. The shape of the secondary cell may also be a coin type, button type, sheet type, cylinder type, prism type, flat type, etc.

The secondary cell of the present invention which is obtained in this way is obtained using the positive electrode for secondary cell of the above-mentioned present invention, so the cell is high in initial capacity and excellent in the rate characteristics and high temperature cycle characteristics.

### EXAMPLES

Below, examples and comparative examples will be given to explain the present invention more specifically. In the examples, "parts" and "%" are based on weight unless otherwise indicated.

Note that, the definitions and methods of evaluation of the characteristics are as follows.

### <Storage Stability of Binder Composition>

The binder compositions which were obtained in the examples and comparative examples were used to evaluate the storage stability. Specifically, each obtained binder composition was allowed to stand, the standing binder composition was observed at predetermined intervals, and the number of days until precipitates were formed from the binder composition was measured to evaluate the storage stability. Note that the storage stability was evaluated in accordance with the following criteria.
A: Formation of precipitates not confirmed for one year or more
B: Formation of precipitates confirmed in one month to less than one year
C: Formation of precipitates confirmed in two weeks to less than one month
D: Formation of precipitates confirmed in period of less than two weeks

### <Corrosion of Current Collector>

The slurry compositions for secondary cell positive electrode which were obtained at the examples and comparative examples were coated on thickness 20 µm aluminum foil current collectors to give dried film thicknesses of 70 µm or so and were dried at 50°C for 20 minutes to obtain positive electrode samples. Further, the obtained positive electrode samples were visually observed over a 10 cm×10 cm range and checked for number of locations where 0.5 mm or greater coating defects occurred so as to evaluate the corrosion of the current collector. Note that, the corrosion of the current collector was evaluated by the following criteria. The greater the number of locations where coating defects occurred, the more the corrosion of the current collector progresses. Therefore, this can be judged as being not preferable.
A: No locations of occurrence of coating defects, smooth overall
B: Locations of occurrence of coating defects numbering one to less than five
C: Locations of occurrence of coating defects numbering five to less than ten
D: Locations of occurrence of coating defects numbering ten or more

### <Initial Capacity>

The secondary cells which were obtained at the examples and comparative examples were charged by the constant current method with a charging rate of 0.1C until 4.3V, then were discharged by a discharge rate of 0.1C down to 3.0V to thereby find the cell capacity at the time of 0.1C discharge. Further, from the obtained cell capacity, the capacity per unit weight of the positive electrode active material layer was calculated and this used as the initial capacity. The initial capacity was evaluated in accordance with the following criteria. The higher the initial capacity, the higher the cell capacity of the secondary cell, so the better.
A: 170 mAh/g or more
B: 150 mAh/g to less than 170 mAh/g
C: 130 mAh/g to less than 150 mAh/g
D: 100 mAh/g to less than 130 mAh/g
E: Less than 100 mAh/g

### <Rate Characteristics>

The secondary cells which were obtained at the examples and comparative examples were charged by the constant current method with a charging rate of 0.1C to 4.3V, then were discharged by a discharge rate of 0.1C down to 3.0V to thereby find the cell capacity at the time of 0.1C discharge. Next, they were charged by the constant current method with a charging rate of 0. 1C to 4. 3V, then were discharged by a discharge rate of 2C down to 3.0V to thereby find the cell capacity at the time of 2C discharge. Further, similar measurement was performed for 10 cells. The average values of the 10 cells at the time of 0.1C discharge and 2C discharge were found and the ratio of the average cell capacity Cap_{0.1C} at the time of 0.1C discharge and the average cell capacity Cap_{2C} at the time of 2C discharge ((Cap_{2C}/Cap_{0.1C})×100%), that is, the 2C discharge capacity maintenance rate, was found. Further, the obtained 2C discharge capacity maintenance rate was used as the basis to evaluate the rate characteristics by the following criteria. Note that, the higher the 2C discharge capacity maintenance rate, the higher the discharge capacity at the time of high rate (2C) discharge and the better the rate characteristics which can be judged, so the better.
A: 2C discharge capacity maintenance rate of 95% or more
B: 2C discharge capacity maintenance rate of 85% to less than 95%
C: 2C discharge capacity maintenance rate of 75% to less than 85%
D: 2C discharge capacity maintenance rate of 60% to less than 75%
E: 2C discharge capacity maintenance rate of less than 60%

### <High Temperature Cycle Characteristics>

The secondary cells which were obtained at the examples and comparative examples were charged under conditions of a temperature of 60 °C by the constant current method with a charging rate of 0.1C until 4. 3V, then were discharged by a discharge rate of 0.1C down to 3.0V. This charging/discharging test was repeated 100 times. Further, the ratio of the discharge capacity Cap₁ₛₜ at the 1st charging/discharging test and the discharge capacity Cap₁₀₀ₜₕ at the 100th discharge test ((Cap₁₀₀ₜₕ/Cap₁ₛₜ)×100%), that is, the 100 cycle capacity maintenance rate, was found. Further, the obtained 100 cycle capacity maintenance rate was used as the basis to evaluate the high temperature cycle characteristics by the following criteria. Note that, the higher the 100 cycle capacity maintenance rate, the less the deterioration at the 100th cycle when performing a high temperature cycle test and the better the high temperature cycle characteristics which can be judged, so the more preferable.
A: 100 cycle capacity maintenance rate of 95% or more
B: 100 cycle capacity maintenance rate of 85% to less than 95%
C: 100 cycle capacity maintenance rate of 75o to less than 85%
D: 100 cycle capacity maintenance rate of 60% to less than 75%
E: 100 cycle capacity maintenance rate of less than 60%

First, examples and comparative examples using, as organic phosphonic acid compounds, low molecular weight organic phosphonic acid compounds (that is, organic phosphonic acid compounds which do not correspond to organic phosphonic acid group-containing polymer compounds) and their related manufacturing examples will be explained.

### (Manufacturing Example 1-1) Production of Water-Based Acrylic Polymer (A1)

To a polymerization tank A, ion-exchanged water 130 parts was added. To this, a polymerization initiator constituted by ammonium persulfate 0.8 part and ion-exchanged water 10 parts were added and the result warmed to 80°C. Next, to a polymerization tank B separate from the above, acrylonitrile 20 parts, 2-ethylhexylacrylate 78 parts, methacrylic acid 2 parts, an emulsifier constituted by an end-hydrophobic group-containing polyvinyl alcohol (made by Kuraray, MP102, nonionic surfactant) 10 parts, and ion-exchanged water 377 parts were added and stirred to prepare an emulsion. The prepared emulsion was successively added over about 240 minutes from the polymerization tank B to the polymerization tank A, then was stirred for about 30 minutes. When the amount of consumption of the monomers reached 95%, the result was cooled to end the reaction and obtain an aqueous dispersion of the water-based acrylic polymer (A1). The obtained aqueous dispersion of the water-based acrylic polymer (A1) had a pH of 2.5, a glass transition temperature of the water-based acrylic polymer (A1) of -32°C, and a dispersed particle size of 0.15 µm. Further, the composition of the obtained water-based acrylic polymer (A1) was measured by ¹H-NMR, whereupon it was 2-ethylhexylacrylate units 78 wt%, acrylonitrile units 20 wt%, and methacrylic acid units 2 wt%. The iodine value was 5 mg/100 mg or less.

### (Manufacturing Example 1-2) Production of Water-Based Acrylic Polymer (A2)

Except for making the amount of the acrylonitrile 40 parts and the amount of the 2-ethylhexylacrylate 58 parts, the same procedure was followed as in Manufacturing Example 1-1 to obtain an aqueous dispersion of the water-based acrylic polymer (A2). The obtained aqueous dispersion of the water-based acrylic polymer (A2) had a pH of 2.5, a glass transition temperature of the water-based acrylic polymer (A2) of -12°C, and a dispersed particle size of 0.15 µm. Further, the composition and iodine value of the water-based acrylic polymer (A2) were as shown in Table 1.

### (Manufacturing Example 1-3) Production of Water-Based Acrylic Polymer (A3)

Except for making the amount of the acrylonitrile 5 parts and the amount of the 2-ethylhexylacrylate 93 parts, the same procedure was followed as in Manufacturing Example 1-1 to obtain an aqueous dispersion of the water-based acrylic polymer (A3). The obtained aqueous dispersion of the water-based acrylic polymer (A3) had a pH of 2.5, a glass transition temperature of the water-based acrylic polymer (A3) of -52°C, and a dispersed particle size of 0.15 µm. Further, the composition and iodine value of the water-based acrylic polymer (A3) were as shown in Table 1.

### (Manufacturing Example 1-4) Production of Water-Based Acrylic Polymer (A4)

Except for making the amount of the 2-ethylhexylacrylate 76 parts and the amount of the methacrylic acid 4 parts, the same procedure was followed as in Manufacturing Example 1-1 to obtain an aqueous dispersion of the water-based acrylic polymer (A4). The obtained aqueous dispersion of the water-based acrylic polymer (A4) had a pH of 2.0, a glass transition temperature of the water-based acrylic polymer (A4) of -32°C, and a dispersed particle size of 0.15 µm. Further, the composition and iodine value of the water-based acrylic polymer (A4) were as shown in Table 1.

### (Manufacturing Example 1-5) Production of Water-Based Acrylic Polymer (A5)

Except for making the amount of the 2-ethylhexyl acrylate 79 parts and the methacrylic acid 1 part, the same procedure was followed as in Manufacturing Example 1-1 to obtain an aqueous dispersion of the water-based acrylic polymer (A5). The obtained aqueous dispersion of the water-based acrylic polymer (A5) had a pH of 3.0, a glass transition temperature of the water-based acrylic polymer (A5) of -32°C, and a dispersed particle size of 0.15 µm. Further, the composition and iodine value of the water-based acrylic polymer (A5) were as shown in Table 1.

### (Manufacturing Example 1-6) Production of Water-Based Acrylic Polymer (A6)

Except for changing the amount of the 2-ethylhexylacrylate to 75 parts and using, instead of methacrylic acid 2 parts, itaconic acid 5 parts, the same procedure was followed as in Manufacturing Example 1-1 to obtain an aqueous dispersion of the water-based acrylic polymer (A6). The obtained aqueous dispersion of the water-based acrylic polymer (A6) had a pH of 2, glass transition temperature of the water-based acrylic polymer (A6) of -25°C, and a dispersed particle size of 0.15 µm. Further, the composition and iodine value of the water-based acrylic polymer (A6) were as shown in Table 1.

### (Manufacturing Example 1-7) Production of Water-Based Acrylic Polymer (A7)

Except for changing the amount of the 2-ethylhexylacrylate to 77 parts and using, instead of methacrylic acid 2 parts, acrylic acid 3 parts, the same procedure was followed as in Manufacturing Example 1-1 to obtain an aqueous dispersion of the water-based acrylic polymer (A7). The obtained aqueous dispersion of the water-based acrylic polymer (A7) had a pH of 3, a glass transition temperature of the water-based acrylic polymer (A7) of -30°C, and a dispersed particle size of 0.15 µm. Further, the composition and iodine value of the water-based acrylic polymer (A7) were as shown in Table 1.

### (Manufacturing Example 1-8) Production of Water-Based Acrylic Polymer (A8)

Except for changing the amount of 2-ethylhexylacrylate to 79 parts and using, instead of methacrylic acid 2 parts, 2-acrylamide-2-methylpropane sulfonic acid (AMPS) 1 part, the same procedure was followed as in Manufacturing Example 1-1 to obtain an aqueous dispersion of the water-based acrylic polymer (A8). The obtained aqueous dispersion of the water-based acrylic polymer (A8) had a pH of 1.5, a glass transition temperature of the water-based acrylic polymer (A8) of -32°C, and a dispersed particle size of 0.15 µm. Further, the composition and iodine value of the water-based acrylic polymer (A8) were as shown in Table 1.

### (Manufacturing Example 1-9) Production of Water-Based Acrylic Polymer (A9)

Except for changing the amount of the 2-ethylhexylacrylate to 80 parts and not blending in methacrylic acid, the same procedure was followed as in Manufacturing Example 1-1 to obtain an aqueous dispersion of the water-based acrylic polymer (A9). The obtained aqueous dispersion of the water-based acrylic polymer (A9) had a pH of 6, a glass transition temperature of the water-based acrylic polymer (A9) of -32°C, and a dispersed particle size of 0.15 µm. Further, the composition and iodine value of the water-based acrylic polymer (A9) were as shown in Table 1.

### (Manufacturing Example 1-10) Production of Water-Based Acrylic Polymer (A10)

Except for using as the emulsifier, instead of an end-hydrophobic group polyvinyl alcohol 10 parts, a concentration 10% sodium
dodecylbenzenesulfonate aqueous solution (anionic surfactant) 10 parts, the same procedure was followed as in Manufacturing Example 1-1 to obtain an aqueous dispersion of the water-based acrylic polymer (A10). The obtained aqueous dispersion of the water-based acrylic polymer (A10) has a pH of 2.5, a glass transition temperature of the water-based acrylic polymer (A10) of -32°C, and a dispersed particle size of 0.15 µm. Further, the composition and iodine value of the water-based acrylic polymer (A10) were as shown in Table 1.

### (Manufacturing Example 1-11) Production of Water-Based Acrylic Polymer (A11)

To a polymerization tank A, 2-ethylhexylacrylate 10.75 parts, acrylonitrile 1.25 parts, an emulsifier constituted by sodium laurylsulfate 0.12 part, and ion-exchanged water 79 parts were added, then a polymerization initiator constituted by ammonium persulfate 0.2 part and ion-exchanged water 10 parts were added and the result warmed to 60°C and stirred for 90 minutes. Next, to a polymerization tank B separate from the above, 2-ethylhexylacrylate 67 parts, acrylonitrile 19 parts, methacrylic acid 2.0 parts, an emulsifier constituted by sodium laurylsulfate 0.7 part, and ion-exchanged water 46 parts were added and stirred to prepare an emulsion. The prepared emulsion was successively added over about 180 minutes from the polymerization tank B to the polymerization tank A, then was stirred for about 120 minutes. The reaction was ended when the amount of consumption of the monomers reached 95%. After that, the result was adjusted in pH by a 4% NaOH aqueous solution to obtain an aqueous dispersion of the water-based acrylic polymer (A11). The obtained aqueous dispersion of the water-based acrylic polymer (A11) had a pH of 10.5, a glass transition temperature of -32°C, and a dispersed particle size of 0.10 µm. Further, the composition of the obtained water-based acrylic polymer (A11) was measured by ¹H-NMR, whereby it was 2-ethylhexylacrylate units 77.75 wt%, acrylonitrile units 20.25 wt%, and methacrylic acid units 2 wt%. The iodine value was 5 mg/100 mg or less.

### (Manufacturing Example 1-12) Production of Highly Saturated Nitrile Polymer (A12)

A metal container with a stirrer was charged with ion-exchanged water 180 parts, concentration 10% sodium dodecylbenzene sulfonate aqueous solution (anionic surfactant) 25 parts, acrylonitrile 25 parts, methacrylic acid 4 parts, and a molecular weight adjuster (t-dodecylmercaptan) 0.4 part in that order. The gas inside of the container was replaced with nitrogen three times, then butadiene 71 parts was charged. Next, the metal container was held at 50°C and charged with a polymerization catalyst (cumen hydroperoxide) 0.1 part. This was stirred while causing a polymerization reaction for 16 hours. Further, a polymerization terminator (concentration 10% hydroquinone aqueous solution) 0.1 part was added to make the polymerization reaction stop, then a water temperature 60°C rotary evaporator was used to remove the residual monomer to obtain an aqueous dispersion (solid content concentration of about 30%) of a nitrile polymer (acrylonitrile-butadiene-methacrylic acid copolymer). Note that, the composition of the obtained nitrile polymer was measured by ¹H-NMR, whereupon the content of acrylonitrile units was 25%, the content of butadiene units was 71%, and the content of methacrylic acid units was 4%.

Next, separate from the above, sulfuric acid of 5 molar equivalents of palladium was added to palladium acetate (the amount used being 2,500 ppm in terms of Pd metal/nitrile rubber) to obtain a palladium catalyst acidic aqueous solution. To the obtained palladium catalyst acidic aqueous solution 300 liters, weight average molecular weight 5,000 polyvinylpyrrolidone was added five-fold with respect to the palladium. Further, a potassium hydroxide aqueous solution was added to prepare a pH9.0 catalyst aqueous solution.

Further, the above obtained nitrile polymer 400 liters (solid content: 120 kg) and the above obtained catalyst aqueous solution in the entire amount were charged into an autoclave with a stirrer. While running nitrogen gas for 10 minutes, the dissolved oxygen in the aqueous dispersion was removed. Next, the system was replaced two times with hydrogen gas, then was pressurized by 3 MPa of hydrogen. Next, the content was warmed to 500°C and reacted for 6 hours to thereby obtain an aqueous dispersion state nitrile polymer hydrogenation reaction mixture.

Next, 30% hydrogen peroxide 24 liters was added to the above obtained aqueous dispersion state nitrile polymer hydrogenation reaction mixture and the result stirred at 800°C for 2 hours for oxidation treatment. Next, the oxidation treated aqueous dispersion state nitrile polymer hydrogenation reaction mixture was adjusted to a pH of 9.5. Dimethyl glyoxime corresponding to 5 molar equivalents of the palladium contained in the catalyst aqueous solution was added as a powder, then the result was warmed to 800 °C and stirred for 5 hours to cause the insolubles to precipitate in the aqueous dispersion. Next, the obtained insolubles were removed by filtration and the obtained white filtrate was concentrated in vacuo by a rotary evaporator to thereby obtain an aqueous dispersion of a highly saturated nitrile polymer (A12) of a solid content concentration 40%. The obtained aqueous dispersion of the highly saturated nitrile polymer (A12) had a pH of 3, a glass transition temperature of the highly saturated nitrile polymer of -20°C, and a dispersed particle size of 0.15 µm. Further, the composition of the highly saturated nitrile polymer (A12) was measured by ¹H-NMR, whereupon other than the majority of the double bonds in the butadiene units being hydrogenated, it was similar to the above nitrile polymer. The iodine value was 10 mg/100 mg or less.

### (Manufacturing Example 1-13) Production of Highly Saturated Nitrile Polymer (A13)

Except for changing the amount of acrylonitrile to 30 parts, the amount of methacrylic acid to 4 parts, and the amount of butadiene to 66 parts, the same procedure was followed as in Manufacturing Example 1-12 to obtain an aqueous dispersion of the highly saturated nitrile polymer (A13). The obtained aqueous dispersion of the highly saturated nitrile polymer (A13) had a pH of 2.5, a glass transition temperature of the highly saturated nitrile polymer (A13) of -20°C, and a dispersed particle size of 0.15 µm. Further, the composition and iodine value of the highly saturated nitrile polymer (A13) were as shown in Table 3.

### (Manufacturing Example 1-14) Production of Highly Saturated Nitrile Polymer (A14)

Except for changing the amount of the acrylonitrile to 10 parts, the amount of the methacrylic acid to 4 parts, and the amount of the butadiene to 86 parts, the same procedure was followed as in Manufacturing Example 1-12 to obtain an aqueous dispersion of the highly saturated nitrile polymer (A14). The obtained aqueous dispersion of the highly saturated nitrile polymer (A14) had a pH of 2.0, a glass transition temperature of the highly saturated nitrile polymer (A14) of -40°C, and a dispersed particle size of 0.15 µm. Further, the composition and iodine value of the highly saturated nitrile polymer (A14) were as shown in Table 3.

### (Manufacturing Example 1-15) Production of Highly Saturated Nitrile Polymer (A15)

Except for making the amount of use of the catalyst aqueous solution at the time of performing the hydrogenation reaction three-quarters of the amount of use in Manufacturing Example 1-12, the same procedure was followed as in Manufacturing Example 1-12 to obtain an aqueous dispersion of the highly saturated nitrile polymer (A15). The obtained aqueous dispersion of the highly saturated nitrile polymer (A15) had a pH of 3.0, a glass transition temperature of the highly saturated nitrile polymer (A15) of -30°C, and a dispersed particle size of 0.15 µm. Further, the composition and iodine value of the highly saturated nitrile polymer (A15) were as shown in Table 3.

### (Example 1-1)

### (A) Preparation of Binder Composition

To an organic phosphonic acid compound constituted by carboxyethanephosphonic acid 3 parts, calcium acetate 2 parts and water 35 parts were added. Next, here, an aqueous dispersion of the water-based acrylic polymer (A1) which was obtained in Manufacturing Example 1-1, 50 parts (solid content concentration 20%) was added to prepare a binder composition.

### (B) Preparation of Slurry Composition for Secondary Cell Positive Electrode

A positive electrode active material constituted by LiNiO₂ 95.7 parts, acetylene black (Denka Black HS-100, made by Denki Kagaku Kogyo) 2 parts, the binder composition prepared above 10 parts (carboxyethanephosphonic acid 0.3 part, calcium acetate 0.2 part, water-based acrylic polymer (A1) 1 part), and a thickener constituted by an etherification degree 0.8 carboxymethylcellulose aqueous solution 40 parts (solid content concentration 2%) were stirred by a planetary mixer together with a suitable quantity of water to prepare a slurry composition for secondary cell positive electrode. Note that, the obtained slurry composition for secondary cell positive electrode was measured for pH by a pH meter, whereupon it was 12.5.

### (C) Preparation of Secondary Cell

The slurry composition for secondary cell positive electrode which was obtained above was coated using a comma coater on a thickness 20 µm aluminum foil current collector to give a dried film thickness of about 70 µm, was dried at 50°C for 20 minutes, then was heat treated at 150°C for 2 hours to obtain an electrode sheet. Further, the obtained electrode sheet was rolled by a roll press to prepare a positive electrode for secondary cell which has a density of 2.1 g/cm³ and has a thickness comprised of the aluminum foil and electrode active material layer controlled to 65 µm.

Next, the positive electrode for secondary cell which was obtained above was cut to a diameter 16 mm disk shape. At the side forming the positive electrode active material layer, a separator comprised of a diameter 18 mm, thickness 25 µm disk shaped polypropylene made porous film, a negative electrode constituted by metal lithium, and an expander metal were successively laminated. The obtained laminate was placed in a stainless steel coin-shaped outer case (diameter 20 mm, height 1.8 mm, stainless steel thickness 0.25 mm) in which a polypropylene-made packing was set. Further, to this case, an electrolytic solution was poured so as not to leave any air. Through polypropylene-made packing, the outer case was covered with a thickness 0.2 mm stainless steel cap and fastened to seal the cell case and prepare a diameter 20 mm, thickness about 2 mm coin type secondary cell. Note that, as the electrolytic solution, a solution comprised of a mixed solvent of ethylene carbonate (EC) and diethyl carbonate (DEC) mixed in EC:DEC=1:2 (volume ratio at 20°C) into which LiPF₆ was dissolved in a concentration of 1 mole/liter was used.

Further, binder composition obtained above was used to evaluate the storage stability. Further, slurry composition for secondary cell positive electrode and secondary cell obtained above were used to evaluate the corrosion of the current collector, initial capacity, rate characteristics, and high temperature cycle characteristics. The results are shown in Table 1.

### (Examples 1-2 to 1-10)

Except for using, instead of the water-based acrylic polymer (A1), the water-based acrylic polymers (A2) to (A10) which were obtained in Manufacturing Examples 1-2 to 1-10 respectivly, the same procedures were followed as in Example 1-1 to prepare and similarly evaluate binder compositions, slurry compositions for secondary cell positive electrode, and secondary cells. The results are shown in Table 1.

### (Example 1-11)

Except for using as the positive electrode active material, instead of LiNiO₂, LiNi_{0.6}Co_{0.2}Mn_{0.2}O₂, the same procedure was followed as in Example 1-1 to prepare and similarly evaluate a binder composition, slurry composition for secondary cell positive electrode, and secondary cell. The results are shown in Table 1.

### (Examples 1-12 and 1-13)

Except for using as the organic phosphonic acid compound, instead of carboxyethanephosphonic acid, phosphonobutane tricarboxylic acid (Example 1-12) and nitrostyrene phosphonic acid (Example 1-13) respectivly, the same procedures were followed as in Example 1-1 to prepare and similarly evaluate binder compositions, slurry compositions for secondary cell positive electrode, and secondary cells. The results are shown in Table 1.

### (Examples 1-14 to 1-17)

Except for using as the polyvalent metal compound, instead of calcium acetate, calcium citrate (Example 1-14), calcium lactate (Example 1-15), calcium maleate (Example 1-16), and magnesium acetate (Example 1-17) respectivly, the same procedures were followed as in Example 1-1 to prepare and similarly evaluate binder compositions, slurry compositions for secondary cell positive electrode, and secondary cells. The results are shown in Table 2.

### (Example 1-18)

Except for changing the amount of LiNiO₂ to 94.2 parts and changing the amount of carboxyethanephosphonic acid to 2 parts, the same procedure was followed as in Example 1-1 to prepare and similarly evaluate a binder composition, slurry composition for secondary cell positive electrode, and secondary cell. The results are shown in Table 2.

### (Example 1-19)

Except for changing the amount of LiNiO₂ to 95.9 parts and changing the amount of carboxyethanephosphonic acid to 0.05 part, the same procedure was followed as in Example 1-1 to prepare and similarly evaluate a binder composition, slurry composition for secondary cell positive electrode, and secondary cell. The results are shown in Table 2.

### (Example 1-20)

Except for changing the amount of LiNiO₂ to 94.1 parts and changing the amount of calcium acetate to 2 parts, the same procedure was followed as in Example 1-1 to prepare and similarly evaluate a binder composition, slurry composition for secondary cell positive electrode, and secondary cell. The results are shown in Table 2.

### (Example 1-21)

Except for changing the amount of LiNiO₂ to 95.8 parts and changing the amount of calcium acetate to 0.05 part, the same procedure was followed as in Example 1-1 to prepare and similarly evaluate a binder composition, slurry composition for secondary cell positive electrode, and secondary cell. The results are shown in Table 2.

### (Example 1-22)

Except for using as the organic phosphonic acid compound, instead of carboxyethanephosphonic acid 0.3 part, nitrotrismethylene sulfonic acid 0.1 part and using as the polyvalent metal compound, instead of calcium acetate 0.2 part, calcium hydroxide 0.1 part and changing the amount of LiNiO₂ to 96 parts, the same procedure was followed as in Example 1-1 to prepare and similarly evaluate a binder composition, slurry composition for secondary cell positive electrode, and secondary cell. The results are shown in Table 2.

### (Comparative Example 1-1)

Except for changing the amount of LiNiO₂ to 96 parts and not blending in an organic phosphonic acid compound constituted by carboxyethanephosphonic acid, the same procedure was followed as in Example 1-1 to prepare and similarly evaluate a binder composition, slurry composition for secondary cell positive electrode, and secondary cell. The results are shown in Table 2.

### (Comparative Example 1-2)

Except for not blending in a polyvalent metal compound constituted by calcium acetate, the same procedure was followed as in Example 1-1 to prepare and similarly evaluate a binder composition, slurry composition for secondary cell positive electrode, and secondary cell. The results are shown in Table 2.

### (Comparative Example 1-3)

Except for using, instead of an organic phosphonic acid compound constituted by carboxyethanephosphonic acid, benzenesulfonic acid 0.3 part, the same procedure was followed as in Example 1-1 to prepare and similarly evaluate a binder composition, slurry composition for secondary cell positive electrode, and secondary cell. The results are shown in Table 2.

### (Comparative Example 1-4)

Except for using, instead of a polyvalent metal compound constituted by calcium acetate, sodium hydroxide 0.2 part, the same procedure was followed as in Example 1-1 to prepare and similarly evaluate a binder composition, slurry composition for secondary cell positive electrode, and secondary cell. The results are shown in Table 2.

### (Examples 1-23 to 1-26)

Except for using, instead of the water-based acrylic polymer (A1), the highly saturated nitrile polymers (A12) to (A15) which were obtained at the Manufacturing Examples 1-12 to 1-15 respectivly, the same procedures were followed as in Example 1-1 to prepare and similarly evaluate binder compositions, slurry composition for secondary cell positive electrode, and secondary cells. The results are shown in Table 3.

Table 1

**Table 1**

| | | | | Examples | | | | | | | | | | | | |
|---|---|---|---|---|---|---|---|---|---|---|---|---|---|---|---|---|
| | | | | 1-1 | 1-2 | 1-3 | 1-4 | 1-5 | 1-6 | 1-7 | 1-8 | 1-9 | 1-10 | 1-11 | 1-12 | 1-13 |
| Composition of slurry composition for secondary cell positive electrode | | | | | | | | | | | | | | | | |
| | LiNiO₂ | | (parts) | 95.7 | 95.7 | 95.7 | 95.7 | 95.7 | 95.7 | 95.7 | 95.7 | 95.7 | 95.7 | - | 95.7 | 95.7 |
| | LiNi_{0.6}Mn_{0.2}Co_{0.2}O₂ | | (parts) | - | - | - | - | - | - | - | - | - | - | 95.7 | - | - |
| | Water-based acrylic polymer | | (parts) | 1.0 | 1.0 | 1.0 | 1.0 | 1.0 | 1.0 | 1.0 | 1.0 | 1.0 | 1.0 | 1.0 | 1.0 | 1.0 |
| | Carboxyethanephosphonic acid | | (parts) | 0.3 | 0.3 | 0.3 | 0.3 | 0.3 | 0.3 | 0.3 | 0.3 | 0.3 | 0.3 | 0.3 | - | - |
| | Phosphonebutane tricarboxylic acid | | (parts) | - | - | - | - | - | - | - | - | - | - | - | 0.3 | - |
| | Nitrostyrene phosphonic acid | | (parts) | - | - | - | - | - | - | - | - | - | - | - | - | 0.3 |
| | Nitrotrismethylene sulfonic acid | | (parts) | - | - | - | - | - | - | - | - | - | - | - | - | - |
| | Benzene sulfonic acid | | (parts) | - | - | - | - | - | - | - | - | - | - | - | - | - |
| | Calcium acetate | | (parts) | 0.2 | 0.2 | 0.2 | 0.2 | 0.2 | 0.2 | 0.2 | 0.2 | 0.2 | 0.2 | 0.2 | 0.2 | 0.2 |
| | Calcium citrate | | (parts) | - | - | - | - | - | - | - | - | - | - | - | - | - |
| | Calcium lactate | | (parts) | - | - | - | - | - | - | - | - | - | - | - | - | - |
| | Calcium maleate | | (parts) | - | - | - | - | - | - | - | - | - | - | - | - | - |
| | Magnesium acetate | | (parts) | - | - | - | - | - | - | - | - | - | - | - | - | - |
| | Calcium hydroxide | | (parts) | - | - | - | - | - | - | - | - | - | - | - | - | - |
| | Sodium hydroxide | | (parts) | - | - | - | - | - | - | - | - | - | - | - | - | - |
| | Acetylene black | | (parts) | 2.0 | 2.0 | 2.0 | 2.0 | 2.0 | 2.0 | 2.0 | 2.0 | 2.0 | 2.0 | 2.0 | 2.0 | 2.0 |
| | Thickener | | (parts) | 0.8 | 0.8 | 0.8 | 0.8 | 0.8 | 0.8 | 0.8 | 0.8 | 0.8 | 0.8 | 0.8 | 0.8 | |
| Water-based acrylic polymer | | | | | | | | | | | | | | | | |
| | Type of water-based acrylic polymer | | | A1 | A2 | A3 | A4 | A5 | A6 | A7 | A8 | A9 | A10 | A1 | A1 | A1 |
| | Composition | Acrylonitrile units | (%) | 20 | 40 | 5 | 20 | 20 | 20 | 20 | 20 | 20 | 20 | 20 | 20 | 20 |
| | | 2-ethylhexyl units | (%) | 78 | 58 | 93 | 76 | 79 | 75 | 77 | 79 | 80 | 78 | 78 | 78 | 78 |
| | | Methacrylic acid units | (%) | 2 | 2 | 2 | 4 | 1 | - | - | - | - | 2 | 2 | 2 | 2 |
| | | Itaconic acid units | (%) | - | - | - | - | - | 5 | - | - | - | - | - | - | - |
| | | Acrylic acid units | (%) | - | - | - | - | - | - | 3 | - | - | - | - | - | - |
| | | AMPS units | (%) | - | - | - | - | - | - | - | 1 | - | - | - | - | - |
| | Iodine value | | (mg/100 mg) | 5 or less | 5 or less | 5 or less | 5 or less | 5 or less | 5 or less | 5 or less | 5 or less | 5 or less | 5 or less | 5 or less | 5 or less | 5 or less |
| | Emulsifier used | | | Nonionic | Nonionic | Nonionic | Nonionic | Nonionic | Nonionic | Nonionic | Nonionic | Nonionic | Nonionic | Nonionic | Nonionic | Nonionic |
| pH of slurry composition for secondary cell positive electrode | | | | 12.5 | 12.5 | 12.5 | 12.5 | 12.5 | 12.5 | 12.5 | 12.5 | 12.5 | 12.5 | 12.5 | 12.5 | 12.5 |
| Evaluation | | | | | | | | | | | | | | | | |
| | Storage stability of binder composition | | | A | A | A | B | B | B | B | B | C | B | A | B | C |
| | Corrosion of current collector | | | A | A | A | A | A | A | A | A | A | A | A | A | A |
| | Initial capacity | | | A | A | B | A | A | A | A | A | A | A | A | A | A |
| | Rate characteristics | | | A | A | A | A | A | A | A | A | A | A | B | A | A |
| | High temperature cycle characteristics | | | A | B | B | A | B | A | A | B | A | A | A | A | A |

Table 2

**Table 2**

| | | | | Examples | | | | | | | | | Comparative Examples | | | |
|---|---|---|---|---|---|---|---|---|---|---|---|---|---|---|---|---|
| | | | | 1-14 | 1-15 | 1-16 | 1-17 | 1-18 | 1-19 | 1-20 | 1-21 | 1-22 | 1-1 | 1-2 | 1-3 | 1-4 |
| Composition of slurry composition for secondary cell positive electrode | | | | | | | | | | | | | | | | |
| | LiNiO₂ | | (parts) | 95.7 | 95.7 | 95.7 | 95.7 | 94.2 | 95.9 | 94.1 | 95.8 | 96 | 96 | 95.7 | 95.7 | 95.7 |
| | LiNi_{0.6}Mn_{0.2}Co_{0.2}O₂ | | (parts) | - | - | - | - | - | - | - | - | - | - | - | - | - |
| | Water-based acrylic polymer | | (parts) | 1.0 | 1.0 | 1.0 | 1.0 | 1.0 | 1.0 | 1.0 | 1.0 | 1.0 | 1.0 | 1.0 | 1.0 | 1.0 |
| | Carboxyethanephosphonic acid | | (parts) | 0.3 | 0.3 | 0.3 | 0.3 | 2,0 | 0.05 | 0.3 | 0.3 | - | - | 0.3 | - | 0.3 |
| | Phosphonebutane tricarboxylic acid | | (parts) | - | - | - | - | - | - | - | - | - | - | - | - | - |
| | Nitrostyrene phosphonic acid | | (parts) | - | - | - | - | - | - | - | - | - | - | - | - | - |
| | Nitrotrismethylene sulfonic acid | | (parts) | - | - | - | - | - | - | - | - | 0.1 | - | - | - | - |
| | Benzene sulfonic acid | | (parts) | - | - | - | - | - | - | - | - | - | - | - | 0.3 | - |
| | Calcium acetate | | (parts) | - | - | - | - | 0.2 | 0.2 | 2,0 | 0.05 | - | 0.2 | - | 0.2 | - |
| | Calcium citrate | | (parts) | 0.2 | - | - | - | - | - | - | - | - | - | - | - | |
| | Calcium lactate | | (parts) | - | 0.2 | - | - | - | - | - | - | - | - | - | - | - |
| | Calcium maleate | | (parts) | - | - | 0.2 | - | - | - | - | - | - | - | - | - | - |
| | Magnesium acetate | | (parts) | - | - | - | - | - | - | - | - | - | - | - | - | - |
| | Calcium hydroxide | | (parts) | - | - | - | - | - | - | - | - | 0.1 | - | - | - | - |
| | Sodium hydroxide | | (parts) | - | - | - | - | - | - | - | - | - | - | - | - | 0.2 |
| | Acetylene black | | (parts) | 2.0 | 2.0 | 2.0 | 2.0 | 2.0 | 2.0 | 2.0 | 2.0 | 2.0 | 2.0 | 2.0 | 2.0 | 2.0 |
| | Thickener | | (parts) | 0.8 | 0.8 | 0.8 | 0.8 | 0.8 | 0.8 | 0.8 | 0.8 | 0.8 | 0.8 | 0.8 | 0.8 | 0.8 |
| Water-based acrylic polymer | | | | | | | | | | | | | | | | |
| | Type of water-based acrylic polymer | | | A1 | A1 | A1 | A1 | A1 | A1 | A1 | A1 | A11 | A1 | A1 | A1 | A1 |
| | Composition | Acrylonitrile units | (%) | 20 | 20 | 20 | 20 | 20 | 20 | 20 | 20 | 20.25 | 20 | 20 | 20 | 20 |
| | | 2-ethylhexyl units | (%) | 78 | 78 | 78 | 78 | 78 | 78 | 78 | 78 | 77.75 | 78 | 78 | 78 | 78 |
| | | Methacrylic acid units | (%) | 2 | 2 | 2 | 2 | 2 | 2 | 2 | 2 | 2 | 2 | 2 | 2 | 2 |
| | | Itaconic acid units | (%) | - | - | - | - | - | - | - | - | - | - | - | - | - |
| | | Acrylic acid units | (%) | - | - | - | - | - | - | - | - | - | - | - | - | - |
| | | AMPS units | (%) | - | - | - | - | - | - | - | - | - | - | - | - | - |
| | Iodine value | | (mg/100 mg) | 5 or less | 5 or less | 5 or less | 5 or less | 5 or less | 5 or less | 5 or less | 5 or less | 5 or less | 5 or less | 5 or less | 5 or less | 5 or less |
| | Emulsifier used | | | Nonionic | Nonionic | Nonionic | Nonionic | Nonionic | Nonionic | Nonionic | Nonionic | Anionic | Nonionic | Nonionic | Nonionic | Nonionic |
| pH of slurry composition for secondary cell positive electrode | | | | 12.5 | 12.5 | 12.5 | 12.5 | 12.5 | 12.5 | 12.5 | 12.5 | 12.5 | 12.5 | 12.5 | 12.5 | 12.5 |
| Evaluation | | | | | | | | | | | | | | | | |
| | Storage stability of binder composition | | | A | A | A | A | A | A | A | A | C | A | A | A | A |
| | Corrosion of current collector | | | B | B | B | C | A | B | A | B | A | D | D | D | D |
| | Initial capacity | | | B | B | B | C | A | B | A | B | A | E | E | E | E |
| | Rate characteristics | | | B | B | B | B | B | A | B | A | A | B | B | B | B |
| | High temperature cycle characteristics | | | A | A | A | A | A | A | A | A | A | D | D | D | D |

Table 3

**Table 3**

| | | | | Examples | | | |
|---|---|---|---|---|---|---|---|
| | | | | 1-23 | 1-24 | 1-25 | 1-26 |
| Composition of slurry composition for secondary cell positive electrode | | | | | | | |
| | LiNiO₂ | | (parts) | 95.7 | 95.7 | 95.7 | 95.7 |
| | LiNi_{0.6}Mn_{0.2}Co_{0.2}O₂ | | (parts) | - | - | - | - |
| | Highly saturated nitrile polymers | | (parts) | 1.0 | 1.0 | 1.0 | 1.0 |
| | Carboxyethanephosphonic acid | | (parts) | 0.3 | 0.3 | 0.3 | 0.3 |
| | Phosphonebutane tricarboxylic acid | | (parts) | - | - | - | - |
| | Nitrostyrene phosphonic acid | | (parts) | - | - | - | - |
| | Nitrotrismethylene sulfonic acid | | (parts) | - | - | - | - |
| | Benzene sulfonic acid | | (parts) | - | - | - | - |
| | Calcium acetate | | (parts) | 0.2 | 0.2 | 0.2 | 0.2 |
| | Calcium citrate | | (parts) | - | - | - | - |
| | Calcium lactate | | (parts) | - | - | - | - |
| | Calcium maleate | | (parts) | - | - | - | - |
| | Magnesium acetate | | (parts) | - | - | - | - |
| | Calcium hydroxide | | (parts) | - | - | - | - |
| | Sodium hydroxide | | (parts) | - | - | - | - |
| | Acetylene black | | (parts) | 2, 0 | 2, 0 | 2, 0 | 2, 0 |
| | Thickener | | (parts) | 0.8 | 0.8 | 0.8 | 0.8 |
| Highly saturated nitrile polymers | | | | | | | |
| | Type of highly saturated nitrile polymers | | | A12 | A13 | A14 | A15 |
| | Composition | Acrylonitrile units | (%) | 25 | 30 | 10 | 25 |
| | | Butadiene units and saturated butadiene units | (%) | 71 | 66 | 86 | 71 |
| | | Methacrylic acid units | (%) | 4 | 4 | 4 | 4 |
| | Iodine value | | (mg/100 mg) | 10 or less | 10 or less | 10 or less | 28 |
| | Emulsifier used | | | Anionic | Anionic | Anionic | Anionic |
| pH of slurry composition for secondary cell positive electrode | | | | 12. 5 | 12.5 | 12. 5 | 12.5 |
| Evaluation | | | | | | | |
| | Storage stability of binder composition | | | B | B | B | B |
| | Corrosion of current collector | | | A | A | A | A |
| | Initial capacity | | | A | A | A | A |
| | Rate characteristics | | | A | A | A | A |
| | High temperature cycle characteristics | | | B | B | B | C |

In the tables, "AMPS" indicates 2-acrylamide-2-methylpropane sulfonic acid.

As shown in Table 1 to Table 3, when blending into the slurry composition for secondary cell positive electrode, an organic phosphonic acid compound and a polyvalent metal compound (calcium acetate, calcium citrate, calcium lactate, calcium maleate, and calcium hydroxide), it was possible to prevent the occurrence of corrosion of the current collector. Further, when made into a secondary cell, it was possible to obtain one which was excellent in initial capacity, rate characteristics, and high temperature cycle characteristics and, further, excellent in storage stability of the binder composition (Examples 1-1 to 1-26).

On the other hand, when not using an organic phosphonic acid compound or when using, instead of an organic phosphonic acid compound, benzenesulfonic acid, and, further, when not using a polyvalent metal compound, the obtained secondary cell was inferior in initial capacity, rate characteristics and high temperature cycle characteristics (Comparative Examples 1-1 to 1-4).

Next, examples and comparative examples using, as organic phosphonic acid compounds, organic phosphonic acid group-containing polymer compounds and their related manufacturing examples will be explained.

### (Manufacturing Example 2-1) Production of Water-Based Acrylic Polymer (A16)

To a polymerization tank A, ion-exchanged water 130 parts was added. To this, a polymerization initiator constituted by ammonium persulfate 0.8 part and ion-exchanged water 10 parts were added and the mixture was heated to 80°C. Next, to a polymerization tank B separate from the above, 2-ethylhexylacrylate 78 parts, acrylonitrile 20 parts, methacrylic acid 2 parts, an emulsifier constituted by an end hydrophobic group-containing polyvinyl alcohol (made by Kuraray, MP102, nonionic surfactant) 18 parts and ion-exchanged water 377 parts were added and stirred to thereby prepare an emulsion. The prepared emulsion was successively added over about 240 minutes from the polymerization tank B to the polymerization tank A, then the mixture was stirred for about 30 minutes. The mixture was cooled to end the reaction when the amount of consumption of the monomers reached 95% to obtain an aqueous dispersion of the water-based acrylic polymer (A16). The obtained aqueous dispersion of the water-based acrylic polymer (A16) had a pH of 2.5, a glass transition temperature of -32°C, and a dispersed particle size of 0.10 µm. Further, the composition of the obtained water-based acrylic polymer (A16) was measured by ¹H-NMR, whereupon it was 2-ethylhexylacrylate units 77.75 wt%, acrylonitrile units 20.25 wt%, and methacrylic acid units 2 wt%. The iodine value was 5 mg/100 mg or less.

### (Manufacturing Example 2-2) Production of Water-Based Acrylic Polymer (A17)

Except for using as the emulsifier, instead of the end hydrophobic group-containing polyvinyl alcohol 18 parts, polyoxyethylene laurylether (made by Kao Corporation, Emulgen 120, nonionic surfactant) 2 parts, the same procedure was followed as in Manufacturing Example 2-1 to obtain an aqueous dispersion of the water-based acrylic polymer (A17). The obtained aqueous dispersion of the water-based acrylic polymer (A17) had a pH of 2.5, a glass transition temperature of -32°C, and a dispersed particle size of 0.10 µm. Further, the composition of the obtained water-based acrylic polymer (A17) was measured by ¹H-NMR, whereupon it was 2-ethylhexylacrylate units 77.75 wt%, acrylonitrile units 20.25 wt%, and methacrylic acid units 2 wt%. The iodine value as 5 mg/100 mg or less.

### (Manufacturing Example 2-3) Production of Water-Based Acrylic Polymer (A18)

Except for using as the emulsifier, instead of the end hydrophobic group-containing polyvinyl alcohol 18 parts, polyoxyethylene alkyl ether sulfate (made by Kao Corporation, Emal D3D, anionic surfactant) 2 parts, the same procedure was followed as in Manufacturing Example 2-1 to obtain an aqueous dispersion of the water-based acrylic polymer (A18). The obtained aqueous dispersion of the water-based acrylic polymer (A18) had a pH of 2.5, a glass transition temperature of -32°C, and a dispersed particle size of 0.10 µm. Further, the composition of the obtained water-based acrylic polymer (A18) was measured by ¹H-NMR, whereupon it was 2-ethylhexylacrylate units 77.75 wt%, acrylonitrile units 20.25 wt%, and methacrylic acid units 2 wt%. The iodine value as 5 mg/100 mg or less.

### (Manufacturing Example 2-4) Production of Organic Phosphonic Acid Group-Containing Polymer Compound (B1)

To a polymerization tank A, vinyl phosphonic acid 39 parts, acrylic acid 61 parts, ion-exchanged water 10 parts, and 3-butyl-peroxy-2-ethylhexanoate 0.22 part were added. The inside was purged by nitrogen, then the mixture was heated to 90°C and held for 22 hours. Note that, while being held for this 22 hours, divided into three times every 7.33 hours, ion-exchanged water 10 parts (total for three times, 30 parts) and, further, divided into 11 times every 2 hours, 3-butyl-peroxy-2-ethyl-hexanoate: part (total for 11 times, 2.42 parts) were added. Further, the mixture was cooled to end the reaction when the amount of consumption of monomers reached 95%, then ion-exchanged water was suitably added to obtain the organic phosphonic acid group-containing polymer compound (B1) in a 20% aqueous solution. The weight ratio, in the obtained organic phosphonic acid group-containing polymer compound (B1), of the vinylphosphonic acid units by measurement of the amount of residual monomers was 39%, the weight ratio of the acrylic acid units was 61%, and, further, the number average molecular weight (Mn) of the organic phosphonic acid group-containing polymer compound (B1) was 70,000.

### (Manufacturing Example 2-5) Production of Organic Phosphonic Acid Group-Containing Polymer Compound (B2)

Except for making the amount of use of the vinylphosphonic acid 3 parts and making the amount of use of the acrylic acid 97 parts, the same procedure was followed as in Manufacturing Example 2-4 to obtain an organic phosphonic acid group-containing polymer compound (B2) in a 20% aqueous solution. The weight ratio, in the obtained organic phosphonic acid group-containing polymer compound (B2), of the vinylphosphonic acid units by measurement of the amount of residual monomers was 3%, the weight ratio of the acrylic acid units was 97%, and, further, the number average molecular weight (Mn) of the organic phosphonic acid group-containing polymer compound (B2) was 70,000.

### (Manufacturing Example 2-6) Production of Organic Phosphonic Acid Group-Containing Polymer Compound (B3)

Except for making the amount of use of the vinylphosphonic acid 14 parts and making the amount of use of the acrylic acid 86 parts, the same procedure was followed as in Manufacturing Example 2-4 to obtain an organic phosphonic acid group-containing polymer compound (B3) in a 20% aqueous solution. The weight ratio, in the obtained organic phosphonic acid group-containing polymer compound (B3), of the vinylphosphonic acid units by measurement of the amount of residual monomers was 14%, the weight ratio of the acrylic acid units was 86%, and, further, the number average molecular weight (Mn) of the organic phosphonic acid group-containing polymer compound (B3) was 70,000.

### (Manufacturing Example 2-7) Production of Organic Phosphonic Acid Group-Containing Polymer Compound (B4)

Except for making the amount of use of the vinylphosphonic acid 60 parts and making the amount of use of the acrylic acid 40 parts, the same procedure was followed as in Manufacturing Example 2-4 to obtain an organic phosphonic acid group-containing polymer compound (B4) in a 20% aqueous solution. The weight ratio, in the obtained organic phosphonic acid group-containing polymer compound (B4), of the vinylphosphonic acid units by measurement of the amount of residual monomers was 60%, the weight ratio of the acrylic acid units was 40%, and, further, the number average molecular weight (Mn) of the organic phosphonic acid group-containing polymer compound (B4) was 70,000.

### (Manufacturing Example 2-8) Preparation of Organic Phosphonic Acid Group-Containing Polymer Compound (B5)

To a polymerization tank A, vinyl phosphonic acid: 39 parts, acrylic acid: 61 parts, ion-exchanged water: 10 parts, and
3-butyl-peroxy-2-ethyl-hexanoate 0.22 part were added. The inside was purged by nitrogen, then the mixture was heated to 100°C and held for 10 hours. Note that, while being held for this 10 hours, divided into three times every 3.33 hours, ion-exchanged water: 10 parts (total for three times, 30 parts) and, further, divided into 11 times every 0.91 hour, 3-butyl-peroxy-2-ethylhexanoate: 0.22 part (total for 11 times, 2.42 parts) were added. Further, the mixture was cooled to end the reaction when the amount of consumption of monomers reached 95%, then ion-exchanged water was suitably added to obtain the organic phosphonic acid group-containing polymer compound (B5) in a 20% aqueous solution. The weight ratio, in the obtained organic phosphonic acid group-containing polymer compound (B5), of the vinyl phosphonic acid units by measurement of the amount of residual monomers was 39%, the weight ratio of the acrylic acid units was 61%, and, further, the number average molecular weight (Mn) of the organic phosphonic acid group-containing polymer compound (B5) was 20,000.

### (Manufacturing Example 2-9) Preparation of Organic Phosphonic Acid Group-Containing Polymer Compound (B6)

To a polymerization tank A, vinyl phosphonic acid 39 parts, acrylic acid 61 parts, ion-exchanged water 10 parts, and 3-butyl-peroxy-2-ethylhexanoate 0.22 part were added. The inside was purged by nitrogen, then the mixture was heated to 80°C and held for 30 hours. Note that, while being held for this 30 hours, divided into three times every 10 hours, ion-exchanged water 10 parts (total for three times, 30 parts) and, further, divided into 11 times every 2.73 hours, 3-butyl-peroxy-2-ethyl- hexanoate 0.22 part (total for 11 times, 2.42 parts) were added. Further, the mixture was cooled to end the reaction when the amount of consumption of monomers reached 95%, then ion-exchanged water was suitably added to obtain the organic phosphonic acid group-containing polymer compound (B6) in a 20% aqueous solution. The weight ratio, in the obtained organic phosphonic acid group-containing polymer compound (B6), of the vinylphosphonic acid units by measurement of the amount of residual monomers was 39%, the weight ratio of the acrylic acid units was 61%, and, further, the number average molecular weight (Mn) of the organic phosphonic acid group-containing polymer compound (B6) was 150,000.

### (Manufacturing Example 2-10) Production of Acrylic Acid Polymer

Except for not using vinyl phosphonic acid and making the amount of use of acrylic acid 100 parts, the same procedure was followed as in Manufacturing Example 2-4 to obtain a 20% aqueous solution of an acrylic acid polymer. The obtained acrylic acid polymer had a number average molecular weight (Mn) of 70,000.

### (Example 2-1)

### (A) Preparation of Binder Composition

To an aqueous solution of the organic phosphonic acid group-containing polymer compound (B1) which was obtained at Manufacturing Example 2-4,5 parts (solid content concentration 20%), calcium acetate 1 part and water 4 parts were added. Next, here, an aqueous dispersion of the water-based acrylic polymer (A16) which was obtained at Manufacturing Example 2-1, 50 parts (solid content concentration 20%) was added to thereby prepare a binder composition.

### (B) Preparation of Slurry Composition for Secondary Cell Positive Electrode

A positive electrode active material constituted by LiNiO₂ 100 parts, acetylene black (Denka Black HS-100, made by Denki Kagaku Kogyo) 2 parts, the above prepared binder composition 6 parts (organic phosphonic acid group-containing polymer compound (B1) 0.1 part and water-based acrylic polymer (A16) 1 part), and a thickener constituted by an etherification degree 0.8 carboxymethylcellulose aqueous solution 40 parts (solid content concentration 2%) were stirred together with a suitable quantity of water in a planetary mixer to thereby prepare a slurry composition for secondary cell positive electrode. Note that, the obtained slurry composition for secondary cell positive electrode was measured for pH by a pH meter, whereupon it was 12.5.

### (C) Preparation of Secondary Cell

Except for using the slurry composition for secondary cell positive electrode which was obtained above, the same procedure was followed as in the above-mentioned Example 1-1 to obtain a positive electrode for secondary cell. The obtained positive electrode for secondary cell was used to perform the same procedure to prepare a coin type secondary cell.

Further, the binder composition which was obtained above was used to evaluate the storage stability. Further, the slurry composition for secondary cell positive electrode and the secondary cell which were obtained above were used to evaluate the corrosion of the current collector, initial capacity, rate characteristics, and high temperature cycle characteristics. The results are shown in Table 4.

### (Examples 2-2 and 2-3)

Except for using as the polyvalent metal compound, instead of calcium acetate, calcium hydroxide (Example 2-2) and barium carbonate (Example 2-3) respectivly, the same procedures were followed as in Example 2-1 to prepare and similarly evaluate binder compositions, slurry compositions for secondary cell positive electrode, and secondary cells. The results are shown in Table 4.

### (Examples 2-4 and 2-5)

Except for changing the amounts of the polyvalent metal compound constituted by calcium acetate to 0.05 part (Example 2-4) and 0.5 part (Example 2-5) respectivly, the same procedures were followed as in Example 2-1 to prepare and similarly evaluate binder compositions, slurry compositions for secondary cell positive electrode, and secondary cells. The results are shown in Table 4.

### (Examples 2-6 to 2-10)

Except for using, instead of the organic phosphonic acid group-containing polymer compound (B1), the organic phosphonic acid group-containing polymer compounds (B2) to (B6) which were obtained in Manufacturing Examples 2-5 to 2-9 respectivly, the same procedures were followed as in Example 2-1 to prepare and similarly evaluate binder compositions, slurry compositions for secondary cell positive electrode, and secondary cells. The results are shown in Table 4.

### (Examples 2-11 and 2-12)

Except for respectively changing the amounts of the aqueous solution of the water organic phosphonic acid group-containing polymer compound (B1) at the time of preparation of the binder composition to 2.5 parts (Example 2-11) and 25 parts (Example 2-12) so as to make the amounts of the organic phosphonic acid group-containing polymer compound (B1) in the slurry compositions for secondary cell positive electrode 0.05 part (Example 2-11) and 0.5 part (Example 2-12), the same procedures were followed as in Example 2-1 to prepare and similarly evaluate binder compositions, slurry compositions for secondary cell positive electrode, and secondary cells. The results are shown in Table 5.

### (Examples 2-13 and 2-14)

Except for respectively changing the amounts of the aqueous dispersion of the water-based acrylic polymer (A16) at the time of preparation of the binder composition to 40 parts (Example 2-13) and 150 parts (Example 2-14) so as to make the amounts of the water-based acrylic polymer (A16) in the slurry compositions for secondary cell positive electrode 0.8 part (Example 2-13) and 3.0 parts (Example 2-14), the same procedures were followed as in Example 2-1 to prepare and similarly evaluate binder compositions, slurry compositions for secondary cell positive electrode, and secondary cells. The results are shown in Table 5.

### (Examples 2-15 and 2-16)

Except for respectively using, instead of the water-based acrylic polymer (A16), the water-based acrylic polymer (A17) which was obtained in Manufacturing Example 2-2 (Example 2-15) and the water-based acrylic polymer (A18) which was obtained in Manufacturing Example 2-3 (Example 2-16), the same procedures were followed as in Example 2-1 to prepare and similarly evaluate binder compositions, slurry compositions for secondary cell positive electrode, and secondary cells. The results are shown in Table 5.

### (Example 2-17)

Except for using as the positive electrode active material, instead of LiNiO₂, LiNi_{0.33}CO_{0.33}Mn_{0.33}O₂, the same procedure was followed as in Example 2-1 to prepare and similarly evaluate a binder composition, slurry composition for secondary cell positive electrode, and secondary cell. The results are shown in Table 5.

### (Comparative Example 2-1)

Except for not using calcium acetate, the same procedure was followed as in Example 2-1 to prepare and similarly evaluate a binder composition, slurry composition for secondary cell positive electrode, and secondary cell. The results are shown in Table 5.

### (Comparative Example 2-2)

Except for not using the organic phosphonic acid group-containing polymer compound (B1), the same procedure was followed as in Example 2-1 to prepare and similarly evaluate a binder composition, slurry composition for secondary cell positive electrode, and secondary cell. The results are shown in Table 5.

### (Comparative Example 2-3)

Except for using, instead of the organic phosphonic acid group-containing polymer compound (B1), the acrylic acid polymer which was obtained in Manufacturing Example 2-10, the same procedure was followed as in Example 2-1 to prepare and similarly evaluate a binder composition, slurry composition for secondary cell positive electrode, and secondary cell. The results are shown in Table 5.

### (Comparative Example 2-4)

Except for using, instead of the organic phosphonic acid group-containing polymer compound (B1), the acrylic acid polymer which was obtained in Manufacturing Example 2-10, the same procedure was followed as in Comparative Example 2-1 to prepare and similarly evaluate a binder composition, slurry composition for secondary cell positive electrode, and secondary cell. The results are shown in Table 5.

Table 4

**Table 4**

| | | | | Examples | | | | | | | | | |
|---|---|---|---|---|---|---|---|---|---|---|---|---|---|
| | | | | 2-1 | 2-2 | 2-3 | 2-4 | 2-5 | 2-6 | 2-7 | 2-8 | 2-9 | 2-10 |
| Composition of slurry composition for secondary cell positive electrode | | | | | | | | | | | | | |
| | LiNiO₂ | | (parts) | 100 | 100 | 100 | 100 | 100 | 100 | 100 | 100 | 100 | 100 |
| | LiNi_{0.6}Mn_{0.2}Co_{0.2}O₂ | | (parts) | - | - | - | - | - | - | - | - | - | - |
| | Water-based acrylic polymer | | (parts) | 1.0 | 1.0 | 1.0 | 1.0 | 1.0 | 1.0 | 1.0 | 1.0 | 1.0 | 1.0 |
| | Organic phosphonic acid group-containing polymer compound | | (parts) | 0.1 | 0.1 | 0.1 | 0.1 | 0.1 | 0.1 | 0.1 | 0.1 | 0.1 | 0.1 |
| | Acrylic acid polymer | | (parts) | - | - | - | - | - | - | - | - | - | - |
| | Calcium acetate | | (parts) | 0.1 | - | - | 0.05 | 0.5 | 0.1 | 0.1 | 0.1 | 0.1 | 0.1 |
| | Calcium hydroxide | | (parts) | - | 0.1 | - | - | - | - | - | - | - | - |
| | Barium carbonate | | (parts) | - | - | 0.1 | - | - | - | - | - | - | - |
| | Acetylene black | | (parts) | 2.0 | 2.0 | 2.0 | 2.0 | 2.0 | 2.0 | 2.0 | 2.0 | 2.0 | 2.0 |
| | Thickener | | (parts) | 0.8 | 0.8 | 0.8 | 0.8 | 0.8 | 0.8 | 0.8 | 0.8 | 0.8 | 0.8 |
| Water-based acrylic polymer | | | | | | | | | | | | | |
| | Type of water-based acrylic polymer | | | A16 | A16 | A16 | A16 | A16 | A16 | A16 | A16 | A16 | A16 |
| | Composition | Acrylonitrile units | (%) | 20.25 | 20.25 | 20.25 | 20.25 | 20.25 | 20.25 | 20.25 | 20.25 | 20.25 | 20.25 |
| | | 2-ethylhexyl units | (%) | 77.75 | 77.75 | 77.75 | 77.75 | 77.75 | 77.75 | 77.75 | 77.75 | 77.75 | 77.75 |
| | | Methacrylic acid units | (%) | 2 | 2 | 2 | 2 | 2 | 2 | 2 | 2 | 2 | 2 |
| | Iodine value | | (mg/100 mg) | 5 or less | 5 or less | 5 or less | 5 or less | 5 or less | 5 or less | 5 or less | 5 or less | 5 or less | 5 or less |
| | Emulsifier used | | | Nonionic | Nonionic | Nonionic | Nonionic | Nonionic | Nonionic | Nonionic | Nonionic | Nonionic | Nonionic |
| Organic phosphonic acid group-containing polymer compound | | | | | | | | | | | | | |
| | Type of organic phosphonic acid group-containing polymer compound | | | B1 | B1 | B1 | B1 | B1 | B2 | B3 | B4 | B5 | B6 |
| | Ratio of content of organic phosphonic acid group-containing monomer units | | (%) | 39 | 39 | 39 | 39 | 39 | 3 | 14 | 50 | 39 | 39 |
| | Number average molecular weight | | | 70.000 | 70.000 | 70.000 | 70.000 | 70.000 | 70.000 | 70.000 | 70.000 | 20.000 | 150.000 |
| pH of slurry composition for secondary cell positive electrode | | | | 12.5 | 12.5 | 12.5 | 12.5 | 12.5 | 12.5 | 12.5 | 12.5 | 12.5 | 12.5 |
| Evaluation | | | | | | | | | | | | | |
| | Storage stability of binder composition | | | A | A | B | A | A | C | B | C | A | B |
| | Corrosion of current collector | | | A | A | C | B | A | C | B | A | B | A |
| | Initial capacity | | | A | A | C | A | C | C | A | A | A | A |
| | Rate characteristics | | | A | B | A | A | B | A | A | A | B | A |
| | High temperature cycle characteristics | | | A | A | A | A | A | A | A | A | A | A |

Table 5

**Table 5**

| | | | | Examples | | | | | | | Comparative Examples | | | |
|---|---|---|---|---|---|---|---|---|---|---|---|---|---|---|
| | | | | 2-11 | 2-12 | 2-13 | 2-14 | 2-15 | 2-16 | 2-17 | 2-1 | 2-2 | 2-3 | 2-4 |
| Composition of slurry composition for secondary cell positive electrode | | | | | | | | | | | | | | |
| | LiNiO₂ | | (parts) | 100 | 100 | 100 | 100 | 100 | 100 | - | 100 | 100 | 100 | 100 |
| | LiNi_{0.6}Mn_{0.2}Co_{0.2}O₂ | | (parts) | - | - | - | - | - | - | 100 | - | - | - | - |
| | Water-based acrylic polymer | | (parts) | 1.0 | 1.0 | 0.8 | 3.0 | 1.0 | 1.0 | 1.0 | 1.0 | 1.0 | 1.0 | 1.0 |
| | Organic phosphonic acid group-containing polymer compound | | (parts) | 0.05 | 0.5 | 0.1 | 0.1 | 0.1 | 0.1 | 0.1 | 0.1 | - | - | - |
| | Acrylic acid polymer | | (parts) | - | - | - | - | - | - | - | - | - | 0.1 | 0.1 |
| | Calcium acetate | | (parts) | 0.1 | 0.1 | 0.1 | 0.1 | 0.1 | 0.1 | 0.1 | - | 0.1 | 0.1 | - |
| | Calcium hydroxide | | (parts) | - | - | - | - | - | - | - | - | - | - | - |
| | Barium carbonate | | (parts) | - | - | - | - | - | - | - | - | - | - | - |
| | Acetylene black | | (parts) | 2.0 | 2.0 | 2.0 | 2.0 | 2,0 | 2.0 | 2.0 | 2.0 | 2.0 | 2.0 | 2.0 |
| | Thickener | | (parts) | 0.8 | 0.8 | 0.8 | 0.8 | 0.8 | 0.8 | 0.8 | 0.8 | 0.8 | 0.8 | 0.8 |
| Water-based acrylic polymer | | | | | | | | | | | | | | |
| | Type of water-based acrylic polymer | | | A16 | A16 | A16 | A16 | A17 | A18 | A16 | A16 | A16 | A16 | A16 |
| | Compo sition | Acrylonitrile units | (%) | 20.25 | 20.25 | 20.25 | 20.25 | 20.25 | 20.25 | 20.25 | 20.25 | 20.25 | 20.25 | 20.25 |
| | | 2-ethylhexyl units | (%) | 77.75 | 77.75 | 77.75 | 77.75 | 77.75 | 77.75 | 77.75 | 77.75 | 77.75 | 77.75 | 77.75 |
| | | Methacrylic acid units | (%) | 2 | 2 | 2 | 2 | 2 | 2 | 2 | 2 | 2 | 2 | 2 |
| | Iodine value | | (mg/100 mg) | 5 or less | 5 or less | 5 or less | 5 or less | 5 or less | 5 or less | 5 or less | 5 or less | 5 or less | 5 or less | 5 or less |
| | Emulsifier used | | | Nonionic | Nonionic | Nonionic | Nonionic | Nonionic | Nonionic | Nonionic | Nonionic | Nonionic | Nonionic | Nonionic |
| Organic phosphonic acid group-containing polymer compound | | | | | | | | | | | | | | |
| | Type of organic phosphonic acid group-containing polymer compound | | | B1 | B1 | B1 | B1 | B1 | B1 | B1 | B1 | - | - | - |
| | Ratio of content of organic phosphonic acid group-containing monomer units | | (%) | 39 | 39 | 39 | 39 | 39 | 39 | 39 | 39 | - | - | - |
| | Number average molecular weight | | | 70.000 | 70.000 | 70.000 | 70.000 | 70.000 | 70.000 | 70.000 | 70.000 | - | - | - |
| pH of slurry composition for secondary cell positive electrode | | | | 12.5 | 12.5 | 12.5 | 12.5 | 12.5 | 12.5 | 12.5 | 12.5 | - | - | - |
| Evaluation | | | | | | | | | | | | | | |
| | Storage stability of binder composition | | | A | A | A | A | B | C | A | A | A | A | A |
| | Corrosion of current collector | | | B | A | A | A | B | A | A | D | C | D | C |
| | Initial capacity | | | A | C | A | C | A | B | A | E | D | E | E |
| | Rate characteristics | | | A | A | A | A | A | C | B | E | D | E | E |
| | High temperature cycle characteristics | | | A | A | B | A | A | A | A | D | C | D | D |

As shown in Tables 4 and 5, when blending into the slurry composition for secondary cell positive electrode an organic phosphonic acid group-containing polymer compound and a polyvalent metal compound (calcium acetate, calcium hydroxide, barium carbonate), it was possible to prevent the occurrence of corrosion of the current collector. Further, when made into a secondary cell, it was possible to obtain one which was excellent in initial capacity, rate characteristics, and high temperature cycle characteristics and, further, excellent in storage stability of the binder composition (Example 2-1 to 2-17).

On the other hand, when not using an organic phosphonic acid group-containing polymer compound or when using an acrylic acid polymer instead of an organic phosphonic acid group-containing polymer compound and, further, when not using a polyvalent metal compound, the obtained secondary cell was inferior in initial capacity, rate characteristics, and high temperature cycle characteristics (Comparative Examples 2-1 to 2-4).

## Claims

1. A positive electrode for secondary cell comprising a current collector which is comprised of aluminum or an aluminum alloy and a positive electrode active material layer, wherein
said positive electrode active material layer contains a positive electrode active material and a water-based binder, **characterized in that** the positive electrode active material further contains an organic phosphonic acid compound and a polyvalent metal compound.

2. The positive electrode for secondary cell as set forth in claim 1, wherein said organic phosphonic acid compound is a polymer compound which has an organic phosphonic acid group.

3. The positive electrode for secondary cell as set forth in claim 1 or 2, wherein said organic phosphonic acid compound further has a carboxyl group or sulfonic acid group.

4. The positive electrode for secondary cell as set forth in any one of claims 1 to 3, wherein said water-based binder is a nitrile group-containing polymer with an iodine value of 0 mg/100 mg or more and 30 mg/100 mg or less.

5. The positive electrode for secondary cell as set forth in claim 4, wherein said nitrile group-containing polymer is obtained by polymerizing the monomers which form said nitrile group-containing polymer by emulsion polymerization using an emulsifier constituted by a nonionic surfactant.

6. The positive electrode for secondary cell as set forth in any one of claims 1 to 5, wherein said polyvalent metal compound is a polyvalent organometallic compound.

7. The positive electrode for secondary cell as set forth in any one of claims 1 to 6, wherein said positive electrode active material contains nickel.

8. A secondary cell comprising the positive electrode for secondary cell as set forth in any one of claims 1 to 7, a negative electrode, a separator, and an electrolytic solution.

9. A slurry composition for secondary cell positive electrode comprising a positive electrode active material, a water-based binder, water, an organic phosphonic acid compound, and a polyvalent metal compound.

10. A method of production of a positive electrode for secondary cell comprising a step of coating a current collector which is comprised of aluminum or an aluminum alloy by the slurry composition for secondary cell positive electrode as set forth in claim 9 and a step of drying said slurry composition for secondary cell positive electrode.

11. Use of a binder composition comprising a water-based binder which is dispersed in water, an organic phosphonic acid compound, and a polyvalent metal compound for the positive electrode of a secondary cell.

## Patentansprüche

1. Eine positive Elektrode für eine Sekundärzelle, umfassend einen Stromabnehmer, der Aluminium oder eine Aluminiumlegierung umfasst, und eine Schicht aus aktivem Material für eine positive Elektrode, wobei
die Schicht aus aktivem Material für eine positive Elektrode ein aktives Material für eine positive Elektrode und ein Bindemittel auf Wasserbasis enthält, **dadurch gekennzeichnet, dass** das aktive Material für eine positive Elektrode weiter eine organische Phosphonsäureverbindung und eine Verbindung eines mehrwertigen Metalls enthält.

2. Die positive Elektrode für eine Sekundärzelle gemäß Anspruch 1, wobei die organische Phosphonsäureverbindung eine Polymerverbindung ist, die eine organische Phosphonsäuregruppe aufweist.

3. Die positive Elektrode für eine Sekundärzelle gemäß Anspruch 1 oder 2, wobei die organische Phosphonsäureverbindung weiter eine Carboxylgruppe oder Sulfonsäuregruppe aufweist.

4. Die positive Elektrode für eine Sekundärzelle gemäß einem der Ansprüche 1 bis 3, wobei das Bindemittel auf Wasserbasis ein nitrilgruppenhaltiges Polymer mit einer Iodzahl von 0 mg/100 mg oder mehr und 30 mg/100 mg oder weniger ist.

5. Die positive Elektrode für eine Sekundärzelle gemäß Anspruch 4, wobei das nitrilgruppenhaltige Polymer durch Polymerisation der Monomere, die das nitrilgruppenhaltige Polymer bilden, mittels Emulsionspolymerisation unter Verwendung eines Emulgators, der aus einem nicht-ionischen oberflächenaktiven Mittel gebildet wird, erhalten wird.

6. Die positive Elektrode für eine Sekundärzelle gemäß einem der Ansprüche 1 bis 5, wobei die Verbindung eines mehrwertigen Metalls eine mehrwertige metallorganische Verbindung ist.

7. Die positive Elektrode für eine Sekundärzelle gemäß einem der Ansprüche 1 bis 6, wobei das aktive Material für eine positive Elektrode Nickel enthält.

8. Eine Sekundärzelle, umfassend die positive Elektrode für eine Sekundärzelle gemäß einem der Ansprüche 1 bis 7, eine negative Elektrode, einen Separator und eine Elektrolytlösung.

9. Eine Aufschlämmungszusammensetzung für eine positive Elektrode für eine Sekundärzelle, umfassend ein aktives Material für eine positive Elektrode, ein Bindemittel auf Wasserbasis, Wasser, eine organische Phosphonsäureverbindung und eine Verbindung eines mehrwertigen Metalls.

10. Ein Verfahren zur Herstellung einer positiven Elektrode für eine Sekundärzelle, umfassend einen Schritt des Beschichtens eines Stromabnehmers, der Aluminium oder eine Aluminiumlegierung umfasst, mit einer Aufschlämmungszusammensetzung für eine positive Elektrode für eine Sekundärzelle gemäß Anspruch 9 und einen Schritt des Trocknens der Aufschlämmungszusammensetzung für eine positive Elektrode für eine Sekundärzelle.

11. Verwendung einer Bindemittelzusammensetzung, umfassend ein Bindemittel auf Wasserbasis, das in Wasser dispergiert ist, eine organische Phosphonsäureverbindung und eine Verbindung eines mehrwertigen Metalls für die positive Elektrode einer Sekundärzelle.

## Revendications

1. Electrode positive pour accumulateur secondaire comprenant un collecteur de courant qui est constitué d'aluminium ou d'un alliage d'aluminium et une couche de matière active d'électrode positive, dans laquelle
ladite couche de matière active d'électrode positive contient une matière active d'électrode positive et un liant à base d'eau, **caractérisée en ce que** la matière active d'électrode positive contient de plus un composé d'acide phosphonique organique et un composé de métal polyvalent.

2. Electrode positive pour accumulateur secondaire selon la revendication 1, dans laquelle ledit composé d'acide phosphonique organique est un composé polymère qui présente un groupe d'acide phosphonique organique.

3. Electrode positive pour accumulateur secondaire selon la revendication 1 ou 2, dans laquelle ledit composé d'acide phosphonique organique présente de plus un groupe carboxyle ou un groupe d'acide sulfonique.

4. Electrode positive pour accumulateur secondaire selon l'une quelconque des revendications 1 à 3, dans laquelle ledit liant à base d'eau est un polymère comprenant un groupe nitrile avec un indice d'iode de 0 mg/100 mg ou supérieur et de 30 mg/100 mg ou inférieur.

5. Electrode positive pour accumulateur secondaire selon la revendication 4, dans laquelle ledit polymère contenant un groupe nitrile est obtenu par polymérisation des monomères qui forment ledit polymère contenant un groupe nitrile par polymérisation en émulsion en utilisant un émulsionnant constitué d'un tensioactif non ionique.

6. Electrode positive pour accumulateur secondaire selon l'une quelconque des revendications 1 à 5, dans laquelle ledit composé de métal polyvalent est un composé organométallique polyvalent.

7. Electrode positive pour accumulateur secondaire selon l'une quelconque des revendications 1 à 6, dans laquelle ladite matière active d'électrode positive contient du nickel.

8. Accumulateur secondaire comprenant l'électrode positive pour accumulateur secondaire selon l'une quelconque des revendications 1 à 7, une électrode négative, un séparateur, et une solution électrolytique.

9. Composition de suspension pour électrode positive d'accumulateur secondaire comprenant une matière active d'électrode positive, un liant à base d'eau, de l'eau, un composé d'acide phosphonique organique, et un composé de métal polyvalent.

10. Procédé de production d'une électrode positive pour accumulateur secondaire comprenant une étape de revêtement d'un collecteur de courant qui est constitué d'aluminium ou d'un alliage d'aluminium par la composition de suspension pour électrode positive d'accumulateur secondaire selon la revendication 9 et une étape de séchage de ladite composition de suspension pour électrode positive d'accumulateur secondaire.

11. Utilisation d'une composition de liant comprenant un liant à base d'eau qui est dispersé dans de l'eau, un composé d'acide phosphonique organique, et un composé de métal polyvalent pour l'électrode positive d'un accumulateur secondaire.
